# EUROPÄISCHE PATENTSCHRIFT

(11) **EP 2 780 780 B1**
(45) Veröffentlichungstag und Bekanntmachung des Hinweises auf die Patenterteilung: **19.06.2024**
(21) Anmeldenummer: 12794895.8
(22) Anmeldetag: 13.11.2012
(51) Int. Cl.: G06F 3/03

(54) **POSITIONSBESTIMMUNG EINES OBJEKTS MITTELS ERFASSUNG EINES POSITIONSMUSTERS DURCH OPTISCHEN SENSOR**
POSITION DETERMINATION FOR AN OBJECT BY MEANS OF THE SENSING OF A POSITION PATTERN BY AN OPTICAL SENSOR
DÉTERMINATION DE LA POSITION D'UN OBJET PAR DÉTECTION D'UN MOTIF DE POSITION PAR UN CAPTEUR OPTIQUE

(30) Priorität: 14.11.2011 DE 102011086318
(43) Veröffentlichungstag der Anmeldung: 24.09.2014
(73) Patentinhaber: Fraunhofer-Gesellschaft zur Förderung der angewandten Forschung e.V., 80686 München (DE)
(72) Erfinder: KRÄGELOH, Stefan, 91056 Erlangen (DE); BLIEM, Tobias, 91058 Erlangen (DE); PICKEL, Jörg, 91230 Happurg (DE); VEY, Christian, 40215 Düsseldorf (DE); ZEH, Rinat, 90455 Nürnberg (DE)
(74) Vertreter: Schenk, Markus
(86) Internationale Anmeldenummer: PCT/EP2012/072513
(87) Internationale Veröffentlichungsnummer: WO 2013/072316

(56) Entgegenhaltungen:
- WO-A2-01/15059
- US-A1- 2005 099 405
- US-A1- 2006 242 562
- US-A1- 2007 001 950
- US-A1- 2008 211 183
- US-A1- 2011 014 982

## Beschreibung

Die vorliegende Erfindung bezieht sich auf Vorrichtungen zum Bestimmen einer Position eines (physikalischen) Objekts und auf dabei möglicherweise zum Einsatz kommende Bildverarbeitungsvorrichtungen und optische Sensorvorrichtung. Die vorliegende Erfindung bezieht sich weiterhin auf Verfahren zum Bestimmen einer Position eines Objekts. Insbesondere bezieht sich die vorliegende Erfindung auf das Bestimmen der Position des Objekts auf, an oder in Bezug zu einem Bildschirm oder einer Anzeigefläche.

Das Bestimmen der Position eines physikalischen Objekts kann im Rahmen von Benutzeroberflächen oder -schnittstellen angewendet werden, um ein Nachführen und/oder Visualisierung einer tatsächlichen, physikalischen Position des physikalischen Objekts z.B. durch eine auf einem Computer ablaufende Software zu ermöglichen. Es gibt zum Beispiel sogenannte "anfassbare Benutzerschnittstellen" (engl.: "tangible user interface" bzw. TUI). Für einen Teilbereich des Anwendungsgebietes "Tangible User Interface" (TUI) möchte man auf einen flach liegenden Computerbildschirm physikalische Objekte legen deren Position und ggf. Orientierung vom Computer automatisch ermittelt werden kann. Dadurch können die physikalischen Objekte mit Darstellungen auf dem Bildschirm verknüpft werden, so dass eine Bewegung dieser Objekte eine unmittelbare Reaktion im Computer hervorrufen kann. Es entsteht der Eindruck die physikalischen Objekte gehören zu den Darstellungen auf dem Bildschirm hinzu, die Darstellungen werden dadurch direkt "greifbar". Die hierin offenbarten technischen Lehren beschreiben Techniken, die eine solche Positionserkennung effizient ermöglichen.

Eine Methode, um die Position der Objekte zu ermitteln besteht darin die Objekte mit einer Kamera zu erfassen, die entweder über dem Bildschirm oder unter dem Bildschirm (z.B. in Verbindung mit einem durchsichtigen Projektionsbildschirm) angebracht ist, was zum Beispiel bei dem Produkt Microsoft Surface^{™} angewendet wird. Bei einer Verfeinerung dieser Technik, die als Microsoft Surface 2 vermarktet wird, ist eine Matrix von lichtempfindlichen Sensoren, die die Kamera ersetzen, direkt in den Bildschirm integriert. Es werden bei diesen Ansätzen also entweder zusätzliche externe Kameras und/oder eine spezielle Bildschirm-Hardware benötigt. Ein anderer bekannter Ansatz (siehe z.B. die internationale Patentanmeldung mit der Veröffentlichungsnummer WO 01/15059 A2 aus dem Jahr 2000) kommt ohne spezielle Bildschirme aus. Bei diesem Ansatz werden Bildsignale auf dem Bildschirm gezeigt, aus denen die Position auf dem Bildschirm ermittelt werden kann, wenn sie von den aufliegenden Objekten erkannt und ausgewertet wird. Die aufgesetzten Objekte haben hierzu optische Sensoren und einen Funkkanal zum Computer, um die Position erkennen und an den Computer übermitteln zu können.

Es ist typischerweise wünschenswert, wenn eine Unsichtbarkeit oder zumindest eine geringe Wahrnehmbarkeit der überlagerten Informationsmuster gewährleistet werden kann. In der erwähnten internationalen Patentanmeldung WO 01/15059 A2 sind verschiedene Möglichkeiten beschrieben, wie einem Hintergrundbild Informationssignale überlagert werden können, um damit die Position der physikalischen Objekte zu ermitteln. Bei einer dieser Varianten ist die überlagerte Information ortsabhängig in Bezug auf den Bildschirm, d.h. in unterschiedlichen Bereichen des Bildschirms werden unterschiedliche Muster überlagert, deren Erkennung direkt auf den Ort rückschließen lässt. Diese Muster können dabei entweder in der Fläche oder in der Zeit gebildet werden. Es ist insbesondere vorgesehen, dass die Muster gleichzeitig für alle Bildbereiche aktiv sind. Daraus ergibt sich der Wunsch dass die überlagerten Muster für den Benutzer möglichst unsichtbar sein sollen. In WO 01/15059 A2 wird zur Lösung dieses Problems lediglich vorgeschlagen, eine spezielle Bildschirm-Hardware zu verwenden, die Lichtsignale im nicht sichtbaren Bereich ausstrahlen kann. Eine Lösung mit einem konventionellen Bildschirm ist nicht beschrieben. Die vorliegende Erfindung beschreibt, wie es auch möglich ist, auf normalen Bildschirmen Muster einzubetten die unterhalb der menschlichen Wahrnehmungsschwelle liegen aber dennoch von den Objekten erkannt werden können, wenn Muster, Sensor-HW und Signalverarbeitung geeignet gewählt werden. Dies ist das Prinzip der "Wasserzeicheneinbettung".

Die veröffentlichte US-Patentanmeldung mit der Veröffentlichungsnummer US 2007/0001950 A1 beschreibt ein Verfahren und ein System zum Präsentieren von Daten auf einem Medium zwecks Erfassung durch eine Eingabevorrichtung. Das Verfahren bettet ein Symboldesign, wie einen eingebetteten Interaktionscode (EIC), in ein Bild auf einem Anzeigebildschirm ein, wie zum Beispiel eine Flüssigkristallanzeige (engl. "liquid crystal display", LCD). Ein Gitter mit einer Vielzahl von Pixeln definiert eine Größe eines EIC-Musters auf einem LCD. Ein Bereich des Gitters wird benutzt, um Positionsdaten und/oder Metadateninformation einzubetten.

Die Druckschrift US 2006/242562 A1 zeigt das Einbetten und das Analysieren eines eingebetteten Interaktionscodes (Embedded Interaction Code, EIC) in ein Dokument. Ferner ist der Aufbau einer EIC-Schriftart gezeigt.

Die Druckschrift US 2005/099405 A1 zeigt einen lichtempfindlichen Stift als Eingabegerät, welcher mit einem Displaysystem zusammenwirkt. Eine Abfolge von Mustern mit einer bestimmten Lichtintensität für jeden Bereich des Displays wird mit dem lichtempfindlichen Stift erfasst, um die Position des lichtempfindlichen Stifts gegenüber dem Displaysystem zu bestimmen.

Die Druckschrift US 2011/014982 A1 zeigt ein Positionserfassungssystem, welches eine Zielgerätposition gegenüber einem Bildbereich erfasst. In ein Originalbild wird eine Markierung als ein Positionsbestimmungsmuster eingearbeitet. Eine Positionserfassungseinheit erfasst die Markierung und bestimmt dann die Zielgeräteposition gegenüber dem Bildbereich.

Die Druckschrift US 2008/211183 A1 zeigt eine Computer gesteuerte Spielfigur. Die Spielfigur hat eine Bodenfläche zum Aufstellen auf einer Anzeigeoberfläche. Die Bodenfläche umfasst einen Bilderfasser, zum Erfassen eines Steuerbildes. Die Spielfigur umfasst ferner Steuermittel, welche mit der Bilderfassung gekoppelt sind, zum Steuern des Aussehens oder der Position der Spielfigur in Abhängigkeit zu dem Steuerbild.

Aufgabe der vorliegenden Erfindung ist es, eine Vorrichtung und ein Verfahren zum Bestimmen der Position eines Objekts zu schaffen, welche(s) mit normaler Bildschirm-Hardware oder Projektions-Hardware zusammenarbeiten kann und dabei ein von der Vorrichtung oder dem Verfahren verwendetes Muster möglichst nicht oder nur wenig von einem menschlichen Betrachter wahrnehmbar ist.

Die Aufgabe der vorliegenden Erfindung wird gelöst durch eine Vorrichtung gemäß Anspruch 1 ein Verfahren gemäß Anspruch 7 und ein Computerprogramm gemäß Anspruch 8.

Entsprechend einem Ausführungsbeispiel schafft die Erfindung eine Vorrichtung zum Bestimmen einer Position eines Objekts in Bezug auf eine Darstellung eines darzustellenden Bildes. Die Vorrichtung weist als Merkmale einem Eingang für zumindest ein darzustellendes Bild, einen Positionsmustererzeuger, eine Kombinationseinheit, einen optischen Sensor, ein Filter und eine Bestimmungseinrichtung auf. Der Positionsmustererzeuger ist konfiguriert zur Erzeugung eines Positionsmusters, das in eine Vielzahl von Musterabschnitten unterteilt ist, wobei jeder der Musterabschnitte ein eindeutiges Bitmuster aus einer Vielzahl von Bitmustern aufweist und wobei die Bitmuster verallgemeinert Gray-kodiert sind. Die Kombinationseinheit ist konfiguriert zum Kombinieren des Positionsmusters mit dem zumindest einen darzustellenden Bild und zum Bereitstellen eines entsprechenden Kombinationsbilds. Der optische Sensor ist konfiguriert zum optischen Erfassen eines Bildausschnitts des Kombinationsbilds, wobei der Bildausschnitt mit der Position des Objekts korreliert. Das Filter ist konfiguriert zum Extrahieren zumindest eines Musterabschnittes des Positionsmusters aus dem Bildausschnitt und zum Bereitstellen zumindest eines entsprechenden extrahierten Musterabschnitts. Die Bestimmungseinrichtung ist konfiguriert zum Bestimmen der Position des Objekts auf der Basis des zumindest einen extrahierten Musterabschnitts.

Einige Ausführungsbeispiele basieren somit darauf, dass die Bitmuster aufgrund der Gray-Kodierung bzw. verallgemeinerten Gray-Kodierung für die verschiedenen Musterabschnitte mit einer relativ geringen Bitanzahl pro Bitmuster auskommen, um eine vergleichbar feine Positionsauflösung zu erhalten. Die geringe Bitanzahl macht es möglich, die Bits derart mit dem darzustellenden Bild zu kombinieren, dass das darzustellende Bild so geringfügig verändert wird, dass es für einen menschlichen Betrachter nicht wahrnehmbar ist oder zumindest nicht auffällt. Hierzu wird die Tatsache ausgenutzt, dass die zu übertragende Information für die einzelnen Bereiche bzw. Musterabschnitte von vorneherein bekannt ist. Wenn die Information durch ein Bitmuster übertragen wird, ist es ohne funktionale Einschränkungen möglich, benachbarten Bereichen bzw. Musterabschnitten Bitmuster zuzuweisen, die möglichst ähnlich sind. Bildbereiche übertragen als Information eine X und eine Y Koordinate (insbesondere ihre eigenen X- und Y-Koordinaten). Zwei benachbarte Bereiche zeichnen sich dadurch aus, dass eine dieser Koordinaten um eins erhöht oder erniedrigt ist. Verwendet man für die Zuweisung der Zahlen zu einem Bitmuster die Gray-Kodierung, so unterscheiden sich die benachbarten Bitmuster immer nur in einem einzigen Bit. Ein Übersprechen zwischen zwei Bereichen führt dann dazu, dass sich die Symbole für alle Bits bis auf eines konstruktiv überlagern (verstärken) und sich nur ein einziges Bit "mischt". Dadurch erfolgt eine sichere Erkennung der gemeinsamen Bits und es kann an dem "gemischten Bit" sogar erkannt werden, dass der Sensor zwischen den zwei Bereichen steht, ohne dass die Codierung der Symbole verlängert wurde.

Unter der verallgemeinerten Gray-Kodierung ist ein Gray-Code zu verstehen, bei dem sich von einem Musterabschnitt zu einem benachbarten Musterabschnitt jeweils nur ein Element ändert, wobei ein Element jedoch ein Bit (d.h. normaler Gray-Code) oder mehr als ein Bit umfassen kann. Gemäß einer Definition sind verallgemeinerte Gray-Codes solche Codes, die sowohl eine reflexive Eigenschaft (engl: "reflective property") als auch eine Einheitsabstand-Eigenschaft (engl.: "unit distance property") aufweisen, wobei der Einheitsabstand ein Bit oder mehr Bits sein kann.

Die Bitmuster benachbarter Musterabschnitte bzw. Bereiche stören sich somit gegenseitig so gut wie nicht (nur in einem Bit), sondern verstärken sich im Gegenteil konstruktiv in den meisten Bits. Entsprechend kann z.B. eine Modulationssequenz, die die Kombination der darzustellenden Bilds mit dem Positionsmuster implementiert, deutlich kürzer sein, als bei anderen Positionsbestimmungsprinzipien. Die Signalenergie der Kombination (z.B. in Form einer Modulation) kann bei Übersprechen benachbarter Zellen weitestgehend konstruktiv verwendet werden. Weiterhin müssen keine zueinander orthogonale Sequenzen mit entsprechender benötigter Länge in benachbarten Musterabschnitten (bzw. Bereichen) verwendet werden. Sieht der Sensor zwei (oder mehr) benachbarte Musterabschnitte teilweise, bleibt die Signalenergie die Summe der gesehenen Teilflächen.

Bei Verwendung einer Modulation zur Kombination des darzustellenden Bilds mit dem Positionsmuster kann die Modulationstiefe gesenkt werden, ohne im Gegenzug durch Spreizung die Sequenzlänge zu erhöhen. Dadurch wird es praktikabel, die Modulation in der Art eines Wasserzeichens ständig unsichtbar in alle (oder zumindest in einige relevante) Bildbereiche einzubetten und trotzdem eine schnelle Positionserkennung zu ermöglichen.

Gemäß alternativen Ausführungsbeispielen weist eine Vorrichtung zum Bestimmen einer Position eines Objekts innerhalb einer Anzeige eines darzustellenden Bildes folgende Merkmale auf: einen Eingang für das darzustellende Bild; einen Modulationsbildgenerator zum Erzeugen zumindest eines Modulationsbilds, wobei das zumindest eine Modulationsbild in eine Vielzahl von Feldern unterteilt ist und ein Modulationsbildwert eines bestimmten Feldes eine Ortsinformation des Felds innerhalb des Modulationsbilds repräsentiert; einen Bildmodulator zum Modulieren des darzustellenden Bilds mit dem Modulationsbild, wobei ein Unterschied zwischen dem darzustellenden Bild und dem mit dem zumindest einen Modulationsbild modulierten Bild unterhalb einer menschlichen Wahrnehmungsschwelle ist; einen Ausgang für das mit dem zumindest einen Modulationsbild modulierte Bild zur Anzeige auf einer Anzeigevorrichtung; einen optischen Sensor zum Erfassen eines optischen Signals, das von einem Bildausschnitt des mit dem Modulationsbild modulierten Bild ausgesendet wird, und zum Erzeugen eines entsprechenden Erfassungssignals; und eine Auswerteeinheit zum Bestimmen einer Bildausschnitt-Ortsinformation anhand des von dem Bildausschnitt ausgesendeten optischen Signals, indem die Auswerteeinheit konfiguriert ist, eine Ortsinformation von zumindest einem zumindest teilweise in dem Bildausschnitt befindlichen Felds aus dem von dem Bildausschnitt ausgesendeten optischen Signal zu extrahieren.

Ausführungsbeispiele der Erfindung werden nachfolgend bezugnehmend auf die beiliegenden Zeichnungen näher erläutert. Es zeigen:
Fig. 1 ein schematisches Blockschaltbild einer Vorrichtung zum Bestimmung einer Position eines Objekts gemäß zumindest einem Ausführungsbeispiel der hierin offenbarten technischen Lehre;
Fig. 2 ein schematisches Blockschaltbild einer Vorrichtung zum Bestimmung einer Position eines Objekts gemäß zumindest einem weiteren Ausführungsbeispiel der hierin offenbarten technischen Lehre;
Fig. 3 eine schematische Darstellung eines Positionsmusters bzw. Modulationsbilds;
Fig. 4 eine schematische Darstellung des Positionsmusters bzw. Modulationsbilds von Fig. 3 mit zwei Beispielen eines Sichtbereichs eines Sensors der Vorrichtung zum Bestimmen der Position eines Objekts;
Fig. 5 eine schematische Veranschaulichung eines zeitlichen Bitmusters;
Fig. 6 eine schematische Veranschaulichung eines räumlichen Bitmusters;
Fig. 7 eine schematische Veranschaulichung eines zeitlich-räumlichen Bitmusters;
Fig. 8 eine schematische Veranschaulichung einer zeitlichen Modulation eines Pixelwerts anhand von zeitlichen Signalverläufen;
Fig. 9 eine schematische Darstellung von zeitlichen Signalverläufen zur Veranschaulichung der Manchester-Kodierung;
Fig. 10 ein schematisches Blockschaltbild einer Vorrichtung zum Bestimmen der Position eines Objekts gemäß zumindest einem weiteren Ausführungsbeispiel;
Fig. 11 ein schematisches Blockschaltbild einer Vorrichtung zum Bestimmen der Position eines Objekts gemäß zumindest einem weiteren Ausführungsbeispiel;
Fig. 12 schematisches Blockschaltbild einer Mustererfassungsvorrichtung gemäß zumindest einem Ausführungsbeispiel der hierein offenbarten technischen Lehre;
Fig. 13 ein schematisches Flussdiagramm für eine Verfahren zum Bestimmen einer Position eines Objekts gemäß zumindest einem Ausführungsbeispiel der offenbarten technischen Lehre; und
Figs. 14A und 14B ein schematisches Flussdiagramm für eine Verfahren zum Bestimmen einer Position eines Objekts gemäß zumindest einem Ausführungsbeispiel der offenbarten technischen Lehre.

Bevor nachfolgend Ausführungsbeispiele der vorliegenden Erfindung im Detail anhand der Zeichnungen näher erläutert werden, wird darauf hingewiesen, dass identische, funktionsgleiche oder gleich wirkende Elemente und Strukturen in den unterschiedlichen Figuren mit den gleichen oder ähnlichen Bezugszeichen versehen sind, so dass die bei den unterschiedlichen Ausführungsbeispielen dargestellte Beschreibung der mit gleichen oder ähnlichen Bezugszeichen versehenen Elemente und Strukturen untereinander austauschbar ist bzw. aufeinander angewendet werden kann.

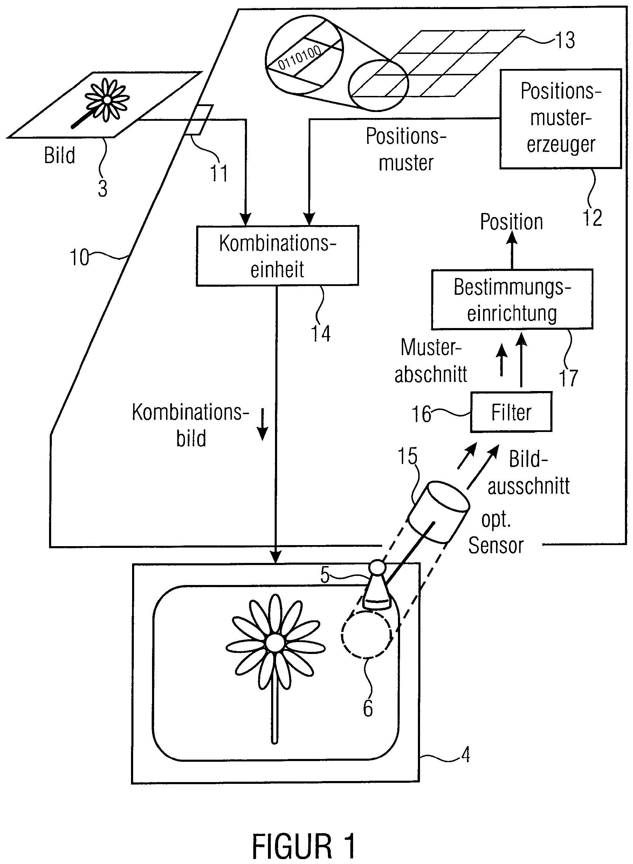

Fig. 1 zeigt ein schematisches Blockschaltbild einer Vorrichtung zum Bestimmen einer Position eines Objekts gemäß zumindest einem möglichen Ausführungsbeispiel der hierin offenbarten technischen Lehre. Die Vorrichtung 10 empfängt ein darzustellendes Bild 3 (d.h. entsprechende Bilddaten) an einem Eingang 11. Das darzustellende Bild 3 soll mittels einer Anzeigevorrichtung 4 dargestellt werden, wobei die Anzeigevorrichtung 4 zum Beispiel ein Bildschirm, ein digitaler Projektor mit entsprechender Projektionsfläche oder eine andere Vorrichtung zum Darstellen von Informationen in optischer Form sein kann. Ein bewegliches Objekt 5 kann nun eine Position in Bezug auf die Anzeige 4 einnehmen, indem das Objekt 5 beispielsweise auf die horizontal ausgerichtete Anzeigefläche der Anzeigevorrichtung 4 gelegt oder gestellt wird und dabei auf einen bestimmten Bildausschnitt des durch die Anzeigevorrichtung 4 dargestellten Bildes ausgerichtet ist. Allgemein ist es jedoch nicht notwendig, dass das Objekt 5 in direktem Kontakt mit der Anzeigevorrichtung 4 ist, sondern es sollte lediglich zugunsten einer eindeutigen bzw. korrekten Positionsbestimmung des Objekts klar sein, welchem Bildausschnitt eine aktuelle Position des Objekts 5 entspricht. Des Weiteren muss die Anzeigefläche der Anzeigevorrichtung 4 nicht horizontal ausgerichtet sein, sondern kann auch schräg oder senkrecht stehen. In diesen Fällen ist es zweckmäßig, wenn das Objekt durch geeignete Maßnahmen an der Anzeigefläche haftet, aufgehängt werden kann oder aufgestellt werden kann. Alternativ kann das Objekt auch von einem Benutzer gehalten oder geführt werden. Das bewegliche Objekt 5 ist in Fig. 1 beispielhaft als eine Spielfigur eines Brettspiels dargestellt, kann jedoch eine Vielzahl von anderen Formen annehmen. Der Bildausschnitt, welcher der Position des Objekts 5 zugeordnet ist, ist in Fig. 1 durch einen gestrichelten Kreis innerhalb der Anzeigefläche der Anzeigevorrichtung 4 angedeutet.

Das bewegliche Objekt 5 ist in der Regel derart mit einem optischen Sensor 15 gekoppelt, dass dieser insbesondere auf den erwähnten Bildausschnitt 6 gerichtet ist. Auf diese Weise ist der optische Sensor 15 konfiguriert, den Bildausschnitt 6 optisch zu erfassen. Der Bildausschnitt 6 korrespondiert dabei mit der Position des Objekts 5. Der optische Sensor 15 kann zu diesem Zweck in das Objekt 5 integriert oder an diesem befestigt sein. Der optisches Sensor 15 ist ein Teil der Vorrichtung 10 zum Bestimmen der Position des Objekts 5.

Ein von dem optischen Sensor 15 erfasster Bildausschnitt wird an ein Filter 16 übermittelt. Das Filter 16 ist konfiguriert, ein Bitmuster oder mehrere Bitmuster aus dem Bildausschnitt herauszufiltern, die eine Positionsinformation des Bildausschnitts enthalten. Das Bitmuster bzw. die mehreren Bitmuster sind durch Informationen repräsentiert, die mit dem darzustellen Bild 3 kombiniert wurden, bevor das darzustellende Bild 3 mittels der Anzeigevorrichtung 4 dargestellt wird. Wenn das Filter 16 ein der Positionsbestimmung dienendes Bitmuster innerhalb des Bildausschnitts mit genügender Zuverlässigkeit erkennt, übermittelt es das Bitmuster oder einen entsprechenden Musterabschnitt an eine Bestimmungseinrichtung 17 der Vorrichtung 10. Die Bestimmungseinrichtung 17 ist konfiguriert zum Bestimmen der Position des Objekts 5 auf der Basis des zumindest einen extrahierten Musterabschnitts bzw. des entsprechenden Bitmusters.

Um das darzustellende Bild 3 mit den für die Positionsbestimmung verwendeten Informationen zu kombinieren, umfasst die Vorrichtung 10 zum Bestimmen der Position des Objekts 5 einen Positionsmustererzeuger 12 und eine Kombinationseinheit 14. Der Positionsmustererzeuger 12 stellt ein Positionsmuster 13 bereit. Das Positionsmuster 13 ist in eine Vielzahl von Musterabschnitten unterteilt. Jeder der Musterabschnitte weist ein eindeutiges Bitmuster aus einer Vielzahl von Bitmustern auf, die eine Identifizierung des jeweiligen Musterabschnittes ermöglichen. Die Bitmuster sind gray-codiert bzw. verallgemeinert gray-codiert. Das Positionsmuster ist typischerweise ein zweidimensionales Muster und die Musterabschnitte bilden typischerweise ein zweidimensionales Array. Gemäß dem Gray-Code unterscheiden sich die Bitmuster von zwei benachbarten Musterabschnitten in nur einem Bit. Bei einer zweidimensionalen Anordnung der Musterabschnitte kann es zweckmäßig sein, für jede Koordinate eine eigene Gray-Codierung zu verwenden, die in zwei separaten Teilen des jeweiligen Bitmusters abgelegt sind. Nichtsdestotrotz ist auch bei einer derartigen koordinatenweise getrennten Gray-Codierung die Bedingung erfüllt, dass sich von einem Musterabschnitt zu einem benachbarten Musterabschnitt (wobei diagonal zueinander angeordnete Musterabschnitte typischerweise nicht als zueinander benachbarte Musterabschnitte gelten) jeweils nur ein Bit ändert. Bei dem verallgemeinerten Gray-Code darf sich ein Bit von einem zum nächsten Musterabschnitt ändern oder auch mehrere Bits. Beim verallgemeinerten Gray-Code ist die aus dem normalen Gray-Code bekannte Bedingung derart verallgemeinert, dass sich nur ein Element (z.B. eine Untermenge des Bitmusters mit mehreren Bits) von einem Musterabschnitt zu einem benachbarten Musterabschnitt ändert.

Das darzustellende Bild 3 und das Positionsmuster 13 werden mittels der Kombinationseinheit 14 kombiniert, so dass sich ein entsprechendes Kombinationsbild ergibt, das zur Anzeige auf der Anzeigevorrichtung 4 bereitgestellt wird.

Der optische Sensor 15 kann beispielsweise über ein flexibles Kabel oder eine drahtlose Verbindung (Funkverbindung, Infrarotverbindung, Ultraschallverbindung oder dergleichen) mit dem Filter 16 verbunden sein. Auf diese Weise ist der optische Sensor 15 beweglich gegenüber dem Rest der Vorrichtung 10. Alternativ kann das flexible Kabel oder die drahtlose Verbindung auch zwischen dem Filter 16 und der Bestimmungseinrichtung 17 vorgesehen sein, oder auch am Ausgang der Bestimmungseinrichtung 17, an dem die Positionsinformation bereitgestellt wird.

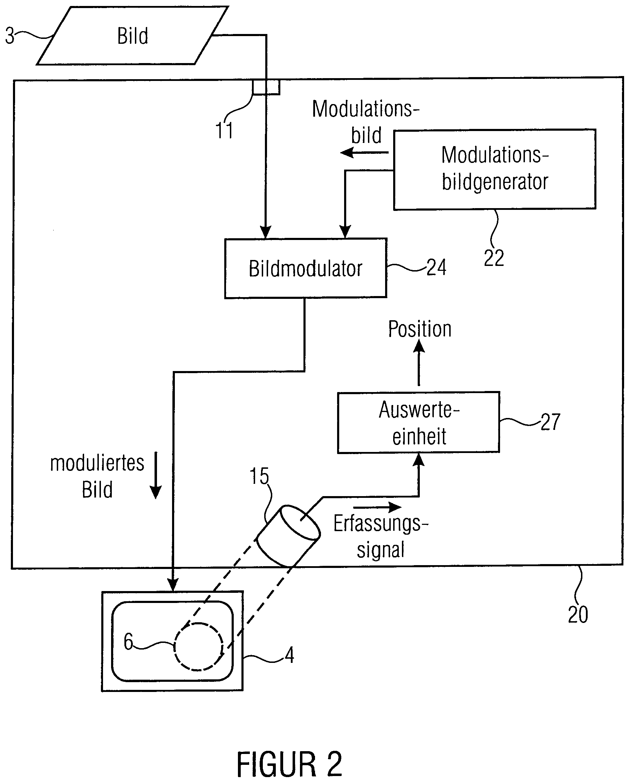

Fig. 2 zeigt ein schematisches Blockschaltbild einer Vorrichtung zum Bestimmen einer Position eines Objekts gemäß zumindest einem weiteren möglichen Ausführungsbeispiels der hierin offenbarten technischen Lehre. Die Vorrichtung 20 umfasst einen Eingang 11 für das darzustellende Bild 3, einen Modulationsbildgenerator 22, einen Bildmodulator 24, einen optischen Sensor 15 und eine Auswerteeinheit 27. Das darzustellende Bild 3 wird innerhalb der Vorrichtung 20 von dem Eingang 11 zu einem Eingang des Bildmodulators 24 weitergeleitet. Ein weiterer Eingang des Bildmodulators 24 ist mit einem Ausgang des Modulationsbildgenerators 22 verbunden. Der Modulationsbildgenerators 22 erzeugt zumindest ein Modulationsbild, das in eine Vielzahl von Feldern unterteilt ist. Dabei repräsentiert ein Modulationsbildwert eines bestimmten Felds eine Ortsinformation des Felds innerhalb des Modulationsbilds. Das Modulationsbild dient einem ähnlichen Zweck wie das Positionsmuster aus dem in Fig. 1 dargestellten Ausführungsbeispiel und kann diesem ggf. sogar entsprechen. In analoger Weise dient die Vielzahl von Feldern einem ähnlichen Zweck wie die Vielzahl von Musterabschnitten des Ausführungsbeispiels von Fig. 1. Weiterhin ist auch der Modulationsbildwert eines bestimmten Felds mit dem eindeutigen Bitmuster eines bestimmten Musterabschnitts, der im Zusammenhang mit der Beschreibung von Fig. 1 erwähnt wurde, hinsichtlich der Funktion und/oder Zweck vergleichbar.

Der Bildmodulator 24 ist dazu konfiguriert, das darzustellende Bild 3 mit dem Modulationsbild zu modulieren. Das darzustellende Bild 3 kann als Trägersignal verstanden werden und das Modulationsbild als Nutzinformation, wobei der Begriff "Nutzinformation" auf die Zwecke der Positionsbestimmung ausgerichtet ist. Durch das Modulieren wird das darzustellende Bild 3 geringfügig verändert, ohne dass ein Betrachter des von der Anzeigevorrichtung 4 angezeigten modulierten Bilds einen spürbaren oder störenden Effekt wahrnimmt. Der Unterschied zwischen dem darzustellenden Bild 3 und dem modulierten Bild ist somit unterhalb einer (durchschnittlichen) menschlichen Wahrnehmungsschwelle. Das Modulationsbild ist auf diese Weise für den menschlichen Betrachter praktisch unsichtbar, obwohl es nichtsdestotrotz im sichtbaren Wellenlängenbereich angezeigt wird. Es ist nämlich wünschenswert, dass die Anzeigevorrichtung 4 eine Standardanzeigevorrichtung ist, die für eine Bildwiedergabe im sichtbaren Wellenlängenbereich ausgelegt ist und keine Einrichtung umfasst, mit der ein definiertes Eingangssignal in einem nicht sichtbaren Wellenlängenbereich (z.B. im infraroten Bereich oder ultravioletten Bereich) wiedergegeben werden kann. Durch diese von der Anzeigevorrichtung 4 vorgegebene Beschränkung des verwendbaren Längenwellenbereichs ergibt sich der Wunsch bzw. die Notwendigkeit, das für die Positionsbestimmung benötigte Modulationsbild ebenfalls im sichtbaren Wellenlängenbereich darstellen zu können.

Der optische Sensor 15 erfasst ein optisches Signal, das von einem Bildausschnitt des mit dem Modulationsbild modulierten Bilds ausgesendet wird und erzeugt ein entsprechendes Erfassungssignal. Der Bildausschnitt, von dem das optische Signal erfasst wird, korreliert dabei mit der Position des Objekts. Wie im Zusammenhang mit Fig. 1 beschrieben, kann der optische Sensor 15 zu diesem Zweck mechanisch mit dem Objekt gekoppelt sein, z.B. indem der optische Sensor 15 in dem Objekt integriert oder an diesem angebracht ist. Es ist auch denkbar, dass der optische Sensor 15 selbst da Objekt darstellt. Mittels der Auswerteeinheit 27 kann nun eine Bildausschnitt-Ortsinformation bestimmt werden. Dazu extrahiert die Auswerteeinheit eine Ortsinformation von zumindest einem Feld, das sich zumindest teilweise in dem Bildausschnitt befindet, aus dem von dem Bildausschnitt ausgesendeten optischen Signal. Zu diesem Zweck kann die Auswerteeinheit einen Demodulator umfassen, der konfiguriert, das Erfassungssignal zu demodulieren und ein ggf. in dem Erfassungssignal enthaltenes Modulationssignal für das zumindest eine (und zumindest teilweise in dem Bildausschnitt befindliche) Feld zu bestimmen. Die Ortsinformation des Felds bzw. der Felder, die sich in dem Bildausschnitt befinden, ergeben sich aus dem von dem Demodulator bestimmten Modulationssignal.

Um die Ortsinformation aus dem optischen Signal zu extrahieren, kann ausgenutzt werden, dass das Modulieren mit definierten Parametern durchgeführt wird. Die definierten Modulationsparameter können sowohl dem Bildmodulator 24 als auch der Auswerteeinheit 27 bekannt sein. Zum Beispiel kann das Modulieren mit einer vordefinierten zeitlichen Frequenz oder räumlichen Frequenz erfolgen. Da die Modulation das darzustellende Bild ohnehin möglichst nur soweit verändern soll, wie ein daraus resultierender Unterschied unter der menschlichen Wahrnehmungsschwelle bleibt, kann auch eine Begrenzung des von der Modulation verwendeten Amplitudenbereichs als Unterscheidungs-unterstützender Parameter herangezogen werden. Unter der Amplitude der Modulation kann dabei z.B. eine von der Modulation verursachte Helligkeitsänderung oder Intensitätsänderung entweder des gesamten darzustellenden Bilds 3 oder eines Farbkanals davon verstanden werden. Mit anderen Worten kann das Modulieren des darzustellenden Bilds mit dem Modulationsbild einen Amplitudenbereich aufweisen und die Auswerteeinheit kann ein Amplituden-sensitives Filter umfassen. Das Amplituden-sensitive Filter kann konfiguriert sein, eine zeitliche Änderung und/oder eine örtliche Änderung des Modulationsbildwerts, die eine Amplitude innerhalb des begrenzten Amplitudenbereichs hat, zu erkennen und ggf. zu extrahieren. Zwar können auch Rauscheinflüsse oder Veränderungen des darzustellenden Bilds 3 entsprechende zeitliche Änderungen und/oder örtliche Änderungen des Modulationsbildwerts verursachen, wobei diese jedoch aufgrund ihrer Zufälligkeit in der Regel keine gültige Ortsinformation bilden und auf diese Weise im weiteren Verlauf der Signalverarbeitung aussortiert werden können. Bei Verwendung mehrerer Sensoren oder eines Sensors mit mehreren Pixeln, die zum Beispiel jeweils einen Bildpunkt einer Gruppe von benachbarten Bildpunkten erfassen, für welche typischerweise derselbe Modulationsbildwert gilt (Ausnahme: Sensor 15 steht auf einer Grenze zwischen zwei Feldern des Modulationsbilds), besteht die Möglichkeit einer gegenseitigen Überprüfung und/oder eines Abgleichs der von den einzelnen Sensoren/Sensorpixeln erfassten Modulationsbildwerte um trotz der Rauscheinflüsse und der Unterschiede innerhalb des darzustellenden Bilds zu einer relativ zuverlässigen Bestimmung des Modulationsbildwerts in dem von dem Sensor 15 betrachteten Bereich zu gelangen.

Die Modulation verändert das darzustellende Bild 3 an einem Bildpunkt ausgehend von dem tatsächlichen Wert (z.B. Helligkeit, (Farb-Kanal-)Intensität, etc.), wobei dieser tatsächliche Wert jedoch im allgemeinen nicht bekannt ist, da im Voraus nicht bekannt ist, welchen Bildausschnitt 6 der optische Sensor 15 erfasst und da sich das darzustellende Bild 3 auch dynamisch verändern kann, insbesondere wenn es sich um ein Fernsehbild, ein Videobild, eine Animation oder die graphische Ausgabe eines Computerspiels bzw. Computer-unterstützten Spiels ist. Unter der Annahme, dass das darzustellende Bild 3 jedoch zumindest zeitabschnittsweise hinreichend konstant innerhalb des erfassten Bildausschnitts 6 ist, kann der Bildmodulator 24 zum Beispiel in regelmäßigen Abständen die Modulation aussetzen und somit das darzustellende Bild 3 an die Anzeigevorrichtung 4 übermitteln. Der Auswerteeinheit 27 kann durch ein spezielles vorhergehendes oder nachfolgendes Bitmuster eine Information übermittelt werden, die besagt, dass in einem nachfolgenden bzw. vorhergehenden Zeitintervall nur das darzustellende Bild 3 angezeigt wird bzw. wurde. Die Auswerteeinheit 27 kann das entsprechende Erfassungssignal somit als Referenzwert verwenden und auf diese Weise die Ortsinformation zuverlässiger und/oder effizienter bestimmen.

Auch bei dem in Fig. 2 gezeigten Ausführungsbeispiel kann die in dem Modulationsbild enthaltene Ortsinformation gray-codiert bezüglich zueinander benachbarter Felder sein. Die Auswerteeinheit kann konfiguriert sein, eine extrahierte, nicht eindeutig einem Feld zuordenbare Ortsinformation auszuwerten, indem relativ eindeutige Bitwerte von Bits der (gray-codierten) Ortsinformation zur Eingrenzung eines räumlichen Bereichs, in dem sich der Bildausschnitt befindet, ausgewertet werden. Weiterhin können relativ indifferente bzw. unsichere Bitwerte von Bits der (gray-codierten) Ortsinformation andeuten, dass der Bildausschnitt zumindest zwei Felder des Modulationsbildes überlappt. Unter der beispielhaften Annahme, dass die Bits binäre Bits sind und zwei Bitwerte annehmen können, die durch eine "0" bzw. eine "1" repräsentiert werden, kann sich für ein oder mehrere Bits der Ortsinformation auch ein Bitwert ergeben, der zwischen 0 und 1 liegt, insbesondere dann, wenn in dem Bildausschnitt zwei oder mehr Felder des Modulationsbildes zumindest teilweise enthalten sind (Überlappung bzw. gleichzeitiges Vorliegen von zumindest zwei Feldem des Modulationsbilds). Der Vorgang des Erfassens des optischen Signals kann zumindest bei einigen Ausführungsbeispielen der hierin offenbarten technischen Lehre als ein analoger Vorgang verstanden werden, bei dem Eigenschaften, Intensität, Farbzusammensetzung und andere des von dem Bildausschnitt ausgesendeten optischen Signals erfasst werden. Die Unterscheidung zwischen relativ eindeutigen Bitwerten und relativ indifferenten bzw. unsicheren Bitwerten kann z.B. mittels zweier Schwellenwerte durchgeführt werden, wobei ein erster Schwellenwert z.B. bei 0,1 und ein zweiter Schwellenwert z.B. bei 0,9 liegt. Bei einem Bitwert, der in dem Intervall [0; 0,1] liegt, kann davon ausgegangen werden, dass es sich um einen relativ eindeutigen Bitwert, nämlich eine "0" handelt. Ebenso kann bei einem Bitwert zwischen 0,9 und 1 davon ausgegangen werden, dass es sich um den relativ eindeutigen Bitwert "1" handelt. Liegt der Bitwert jedoch in dem Intervall [0,1; 0,9] (ausschließlich der Intervallgrenzen), kann keine eindeutige Aussage über den Bitwert getroffen werden, so dass der entsprechende Bitwert als relativ indifferent bzw. unsicher klassifiziert wird. Wie oben erwähnt, sind die genannten Schwellenwerte 0,1 und 0,9 als Beispiele zu verstehen und andere Schwellenwerte sind ebenfalls denkbar, z.B. 0,15 oder 0,2 oder 0,25 für den unteren Schwellenwert, sowie 0,75 oder 0,8 oder 0,85 für den oberen Schwellenwert. Ein relativ indifferenter bzw. unsicherer Bitwert kann insbesondere dadurch verursacht werden, dass in dem von dem Bildsensor erfassten Bildausschnitt nicht nur ein Feld des Modulationsbilds enthalten ist, sondern dass der Bildausschnitt zwei oder mehr Felder zu unterschiedlichen (Flächen-)Anteilen enthält. Ein zwischen dem unteren Schwellenwert und dem oberen Schwellenwert liegender Bitwert zeigt somit an, dass sich der Bildausschnitt auf der Grenze zwischen zwei oder mehr Feldern des Modulationsmusters befindet. In gewisser Weise kann das Erfassungssignal zumindest in einigen Ausführungsbeispielen als ein "fuzzy logic"-Signal verstanden werden, welches von der Auswerteeinheit 27 ausgewertet wird, um Wahrscheinlichkeiten bzw. Anteile von Feldern des Modulationsbilds, die in dem Bildausschnitt enthalten sind, zu bestimmen. In diesem Sinne kann die Vorrichtung zum Bestimmen einer Position eines Objekts innerhalb einer Anzeige eines darzustellenden Bildes eine Fuzzy-Logic umfassen, die konfiguriert ist, ein von dem optischen Sensor 15 bereitgestelltes Erfassungssignal auszuwerten und anzugeben, welches Feld des Modulationsmusters bzw. welche Felder des Modulationsmusters mit ungefähr welchem Anteil in dem Bildausschnitt enthalten sind.

Es wäre wünschenswert, eine gleichzeitige, schnelle Erkennung mehrerer Objekte an beliebigen Bildschirmpositionen, eine skalierbare Ortsauflösung und einen konstruktiven Umgang mit Interkanalinterferenzen bei einer Positionsbestimmungsvorrichtung bzw. einem Positionsbestimmungsverfahren zu ermöglichen. Bei einem möglichen Ausführungsbeispiel der Vorrichtung zum Bestimmen einer Position hat der optische Sensor, der typischerweise an das Objekt gekoppelt ist, nur wenige Lichtsensoren, die jeweils eine kleine Fläche des Bildschirms von z.B. 1 oder 2 mm² Fläche als einen Punkt erfassen (entweder nur als einen Helligkeitswert oder als drei Helligkeiten der Farben Rot, Grün und Blau oder als eine andere Eigenschaft des von dem Bildausschnitt ausgesendeten optischen Signals). Durch zeitliche Modulation aufeinanderfolgender Bilder wird ein zeitliches Muster in jedem der kleinen Bildschirmbereiche übertragen. Diese Muster enthalten eine zeitliche Synchronisationsinformation, eine X-Koordinate und eine Y-Koordinate des jeweiligen Bereichs.

Es ist typischerweise unvermeidlich, dass das Objekt bzw. der optische Sensor im Grenzbereich zwischen zwei (oder noch mehr) Bereichen stehen kann, so dass sich die Muster dieser Bereiche auf dem Sensor überlagern. Es tritt ein Übersprechen zwischen den Mustern benachbarter Bildbereiche ein, die zu einer Interferenz der Muster führt (engl.: "interchannel interference", ICI), die eserschweren oder unmöglich machen können, die Muster zu erkennen (insbesondere bei Positionsbestimmungstechniken, die nicht die hierein offenbarte technische Lehre anwenden). Eine übliche Vorgehensweise in der Nachrichtenübertragung würde daraus bestehen, für die Muster in den benachbarten Kanälen orthogonale Sequenzen zur Modulation zu verwenden, die auch bei Interferenz zwischen den Symbolen noch erkannt werden können. Der Nachteil hierbei ist, dass dazu die zur Übertragung nötige Zeit verlängert werden muss, die Information also seltener übertragen werden kann.

Die hierin offenbarte technische Lehre beschreibt eine alternative Möglichkeit, die einige Vorteile bietet. Hierzu wird die Tatsache ausgenutzt, dass die zu übertragende Information für die einzelnen Bereiche von vornherein bekannt ist. Wenn die Information durch ein Bitmuster übertragen wird, ist es ohne funktionale Einschränkungen möglich, benachbarten Bereichen Bitmuster zuzuweisen, die möglichst ähnlich sind. Bildbereiche übertragen als Information eine X- und eine Y-Koordinate, zwei benachbarte Bereiche zeichnen sich zum Beispiel dadurch aus, dass eine dieser Koordinaten um 1 erhöht oder erniedrigt ist. Verwendet man für die Zuweisung der Zahlen zu einem Bitmuster die Gray-Codierung, so unterscheiden sich die benachbarten Bitmuster immer nur in einem einzigen Bit (oder in mehreren Bits bei einem verallgemeinerten Gray-Code). Ein Übersprechen zwischen zwei Bereichen führt dann dazu, dass sich die Symbole für alle Bits auf ein Bit konstruktiv überlagern (verstärken) und sich nur ein einziges Bit "mischt". Dadurch erfolgt eine sichere Erkennung der gemeinsamen Bits und es kann an dem "gemischten Bit" sogar erkannt werden, dass der Sensor zwischen den zwei Bereichen steht, ohne dass die Codierung der Symbole verlängert wurde. Während bei der Verwendung orthogonaler Sequenzen das Signal auf jeden Fall schwächer wird, wenn z.B. zwei Kanäle mit der Hälfte der Energie gemischt werden, tritt hier für die gemeinsamen Bits keine Abschwächung des Signals ein.

Dieses Verfahren funktioniert sogar, wenn sich mehrere benachbarte Bereiche überlappen, z.B. weil der Sensor eine Bildfläche beobachtet, auf der sich mehrere Bereiche gleichzeitig befinden. In diesem Fall mischen sich so viele Bits, wie der Größe des Bereichs entsprechen, alle anderen Bits verstärken sich konstruktiv, da sie für alle Symbole identisch sind. Dadurch ist es möglich den Bildschirm in sehr kleine Bereiche aufzuteilen und die örtliche Position der Objekte mit ein und derselben Bildschirmmodulation genauer oder weniger genau zu bestimmen, je nachdem wie groß die Bildschirmfläche ist, die der Sensor des Objektes beobachtet. Die Ortsauflösung lässt sich also einfach skalieren.

Erfolgt die Nummerierung durch (x,y) Koordinatenpaare in Zeilen und Spalten haben in x-Richtung die y-Werte benachbarter Flächen den gleichen Wert, in y-Richtung haben die x-Werte den gleichen Wert. Dies wirkt als weiteres konstruktives Übersprechen, wenn sich am Sensor die entsprechenden zwei Bereiche überlagern. Ohne Beeinträchtigung der Vorteile des Verfahrens, lassen sich die drei Komponenten Synch, X und Y- Koordinate auf drei parallel übertragene Kanäle aufteilen, z.B. der blauen, der roten und der grünen Farbinformation. Für diesen Fall wird ein RGB-Sensor im Objekt verwendet.

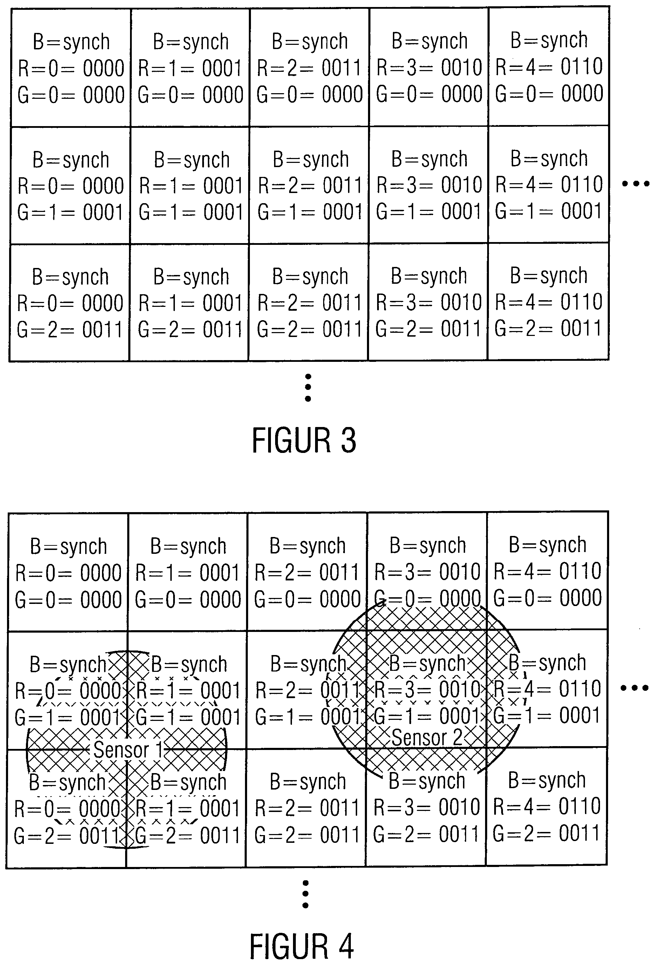

Fig. 3 zeigt als Beispiel ein mögliches Positionsmuster bzw. ein mögliches Modulationsbild. Das Positionsmuster bzw. Modulationsbild kann nach unten und nach rechts erweitert werden. Die Buchstaben B, R und G stehen für die Farbkanäle Blau, Rot und Grün. Mittels des blauen Farbkanals wird ein Synchronisationssignal übermittelt. Das Synchronisationssignal kann z.B. ein periodisches Modulationsmuster innerhalb des blauen Farbkanals sein, welches von der Auswerteeinrichtung bzw. der Bestimmungseinrichtung erkannt werden kann. Mittels des roten Farbkanals wird die X-Koordinate des jeweiligen Musterabschnitts des Positionsmusters bzw. des Felds des Modulationsbilds übermittelt. Über den grünen Farbkanal wird die Y-Koordinate des Musterabschnitts bzw. Felds übermittelt.

Der Bildschirm wird in eine Matrix kleiner Flächen von z.B. 1*1 mm² unterteilt. Die Flächen werden in x und y Richtung durchnummeriert, eine Fläche wird durch ein Wertepaar (x,y) eindeutig identifiziert. Jede der Flächen soll nun mit einer Modulation versehen werden, die die Koordinaten (x,y) der Fläche übermittelt.

Die Zahlen X und Y werden Gray-Codiert, so dass sich die Werte für benachbarte Bildbereiche genau um 1 Bit unterscheiden. X und Y werden nun sequentiell übertragen wobei die Übertragung in allen Bereichen zueinander synchronisiert ist, d.h. für alle Bereiche wird das "erste" Bit der x bzw. der y Koordinate zum selben Zeitpunkt übertragen. Für die Synchronisation des Empfängers mit dem Sender wird ein extra Synchronisationsmuster übertragen. Die Übertragung der 3 Teile Synchronisation, x und y kann sequentiell geschehen, sie kann jedoch auch auf die 3 Farbkanäle Rot, Grün und Blau gelegt werden. In letzterem Fall findet die Übertragung der Synchronisation, der X-Koordinate und der Y-Koordinate gleichzeitig statt, wie im folgenden Bild schematisch dargestellt.

Fig. 4 zeigt zwei Beispiele der Auswirkungen, wenn sich die Teilflächen auf dem Sensor überlappen. Der Sichtbereich des Sensors (d.h. der erfasste Bildausschnitt) für die zwei Beispiele ist hier als Kreis mit der Bezeichnung "Sensor 1" bzw. "Sensor 2" dargestellt.

Im Fall Sensor 1 sitzt der Sensor genau zwischen vier Bereichen. Die Anteile der vier Bereich mischen sich in gleicher Stärke, d.h. das Bit der X- bzw. Y-Koordinate, das sich vom einen Bereich zum benachbarten ändert, wird einen Zwischenwert einnehmen, die anderen Bits sind eindeutig, wie in der folgenden Tabelle dargestellt.

| | Blau = synch | Rot = x | Grün = y |
|---|---|---|---|
| Bereich (R=0, G=1), 25% | abcd | 0; 0; 0; 0 | 0; 0; 0; 1 |
| Bereich (R=1, G=1), 25% | abcd | 0; 0; 0; 1 | 0; 0; 0; 1 |
| Bereich (R=0, G=2), 25% | abcd | 0; 0; 0; 0 | 0; 0; 1; 1 |
| Bereich (R=1, G=2), 25% | abcd | 0; 0; 0; 1 | 0; 0; 1; 1 |
| Gewichtete Summe | abcd | 0; 0; 0; 0,5 | 0; 0; 0,5; 1 |

Jeder der vier Bereiche nimmt ein Viertel der Fläche des Sichtbereichs des optischen Sensors 15 ein.

Im Fall "Sensor 2" sitzt der Sensor genau in der Mitte über einem Bereich. Dieser voll erfasste Bereich liefert den größten Beitrag, die anderen vier Bereich z.B. nur jeweils 10% (noch kleinere Bereiche vernachlässigt) In einer Tabelle lässt sich dies folgendermaßen darstellen.

| | Blau = synch | Rot = x | Grün = y |
|---|---|---|---|
| Bereich (R=3, G=0), 10% | abcd | 0; 0; 1; 0 | 0; 0; 0; 0 |
| Bereich (R=2, G=1), 10% | abcd | 0; 0; 1; 1 | 0; 0; 0; 1 |
| Bereich (R=3, G=1), 60% | abcd | 0; 0; 1; 0 | 0; 0; 0; 1 |
| Bereich (R=4, G=1), 10% | abcd | 0; 1; 1; 0 | 0; 0; 0; 1 |
| Bereich (R=3, G=2), 10% | abcd | 0; 0; 1; 0 | 0; 0; 1; 1 |
| Gewichtete Summe | abcd | 0 0,1 1 0,1 | 0 0 0,1 0,9 |

In X- und Y-Richtung sind hier drei Bereich betroffen, also auch zwei Bitübergänge. Der Bitzustand des mittleren Bereichs wird am stärksten wiedergegeben, das Bit des Nachbarbereichs macht sich mit seinem Anteil bemerkbar. Dadurch wird das Ergebnis etwas unschärfer, bei entsprechend guter Signalqualität kann jedoch immer noch darauf geschlossen werden, welcher Bereich im Mittelpunkt liegt. Die Gray-Kodierung erlaubt hier quasi ein weiches Überblenden zwischen benachbarten Bereichen.

Da sich die Modulationen benachbarter Bereiche also nicht gegenseitig stören, sondern im Gegenteil konstruktiv verstärken, kann auf zueinander orthogonale Modulationssequenzen in benachbarten Flächen verzichtet werden. Entsprechend ist die Modulationssequenz deutlich kürzer. Insgesamt wird das gewonnene Signal gestärkt, da ja jetzt nicht nur ein Teilbereich mit seiner orthogonalen Sequenz die Signalenergie liefert, sondern alle sichtbaren Teilbereiche. Dadurch kann die Modulationstiefe bei feiner Auflösung (kleine Bereiche) soweit verringert werden, dass sie unterhalb der menschlichen Wahrnehmungsschwelle bleibt.

Da die Modulation eine Überlagerung des Hintergrundbildes ist und der absolute Pegel des Hintergrundes bei der Detektion nicht bekannt ist, kann es zweckmäßig sein, dass ausreichend oft ein Wechsel zwischen einer modulierten "0" oder "1" erfolgt, da sonst eine 0 nicht von einer 1 unterschieden werden kann. Dazu kann z.B. eine Manchester-Kodierung verwendet werden, die jedes Bit des Graycodes durch eine Sequenz (1,0) oder (0,1) ersetzt. Durch diese differentielle Kodierung kann der Decoder die Differenz zwischen zwei aufeinanderfolgenden Bildern bilden, um den Übergang der Modulation von 0 nach 1 oder von 1 nach 0 zu erkennen. Der absolute Helligkeitspegel ist dabei im Wesentlichen unerheblich. Alternativ kann diese Form der Manchester-Kodierung auch nur alle n Bits verwendet werden oder es können in geeigneten Abständen Pilotzellen eingebunden werden.

Zusammenfassend unterscheidet sich die vorliegende Erfindung durch zumindest einige der folgenden Punkte vom Stand der Technik:
- Die Signalenergie der Modulation benachbarter Zellen kann bei Übersprechen weitestgehend konstruktiv verwertet werden, es müssen keine orthogonalen Sequenzen in benachbarten Bereichen verwendet werden. Sieht der Sensor zwei (oder mehr) benachbarte Flächen teilweise, bleibt die Signalenergie die Summe der gesehenen Teilflächen.
- Das System kann noch arbeiten, wenn der vom Sensor beobachtete Bereich mehrere der modulierten Flächen umfasst. Das System ist in der Fläche skalierbar, kann also z.B. bei derselben Anzahl von Bildbereichen auf größeren und kleineren Bildschirmen funktionieren.
- Die Modulationstiefe kann gesenkt werden, ohne im Gegenzug durch Spreizung die Sequenzlänge zu erhöhen. Dadurch wird es praktikabel, die Modulation in der Art eines Wasserzeichens ständig unsichtbar in alle Bildbereiche einzubetten und trotzdem eine schnelle Positionserkennung zu ermöglichen.

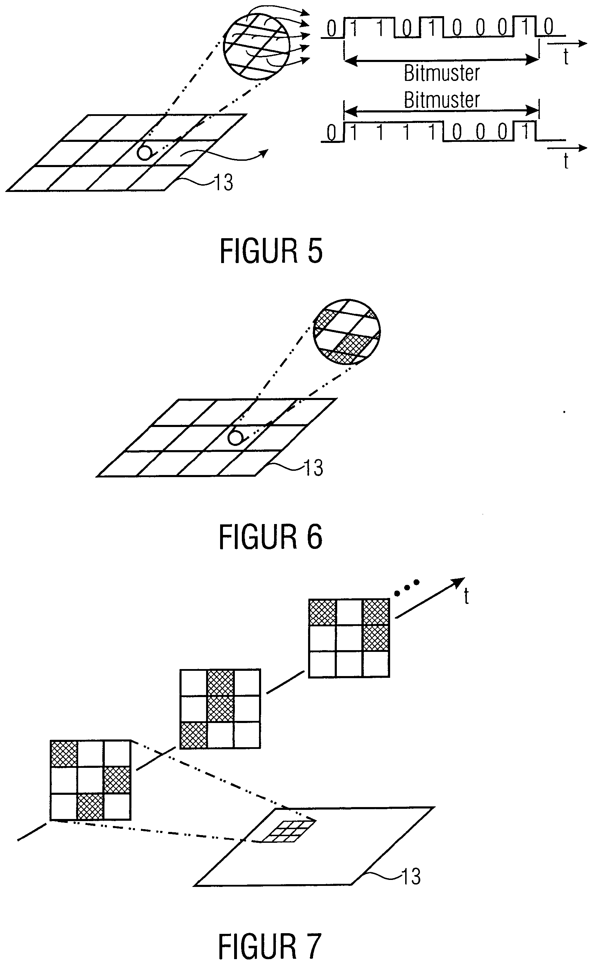

Fig. 5 veranschaulicht ein Positionsmuster 13 bzw. Modulationsbild, das für eine zeitliche Modulation des darzustellenden Bilds 3 verwendet werden kann. Das Positionsmuster 13 ist in mehrere Musterabschnitte unterteilt, wobei jeder Musterabschnitt einen Bildpunkt (Pixel) oder eine Vielzahl von Bildpunkten oder Pixeln umfasst. Als Beispiel ist ein Ausschnitt eines Musterabschnitts vergrößert dargestellt. Da alle zu diesem Ausschnitt gehörenden Bildpunkte bzw. Pixel zum selben Musterabschnitt gehören, folgen sie alle demselben zeitlichen Bitmuster. Das in Fig. 5 als Beispiel dargestellte zeitliche Bitmuster umfasst acht Bits. Zum Vergleich ist auch ein weiteres Bitmuster in Fig. 5 dargestellt, das zu einem rechts benachbarten Musterabschnitt innerhalb des Positionsmusters 13 gehört. Da es sich um einen benachbarten Musterabschnitt handelt, unterscheiden sich die Bitmuster gemäß der Gray-Codierung nur in einem Bit, hier dem dritten Bit.

Fig. 6 veranschaulicht ein räumliches Bitmuster, das innerhalb eines Musterabschnitts auftreten kann. Das räumliche Bitmuster kann z.B. eine 3x3 Matrix oder eine 4x4 Matrix (allgemein m × n Matrix) sein und sich gegebenenfalls innerhalb des entsprechenden Musterabschnitts wiederholen. Der optische Sensor 15 umfasst in diesem Fall zweckmäßigerweise ebenfalls eine Matrix aus Pixeln, die zumindest so viele Pixel umfasst, wie das räumliche Bitmuster.

Fig. 7 veranschaulicht ein zeitlich-räumliches Bitmuster, bei dem die einzelnen Bildpunkte bzw. Pixel eines Arrays von Bildpunkten sich gemäß einem bestimmten zeitlichen Muster ändern.

Für das zeitliche Bitmuster von Fig. 5, das räumliche Bitmuster von Fig. 6 und das zeitlich-räumliche Bitmuster von Fig. 7 gilt jeweils zusätzlich, dass die Ortsinformation auch auf die verschiedenen Farbkanäle einer farbigen Anzeige des darzustellenden Bildes aufgeteilt werden können.

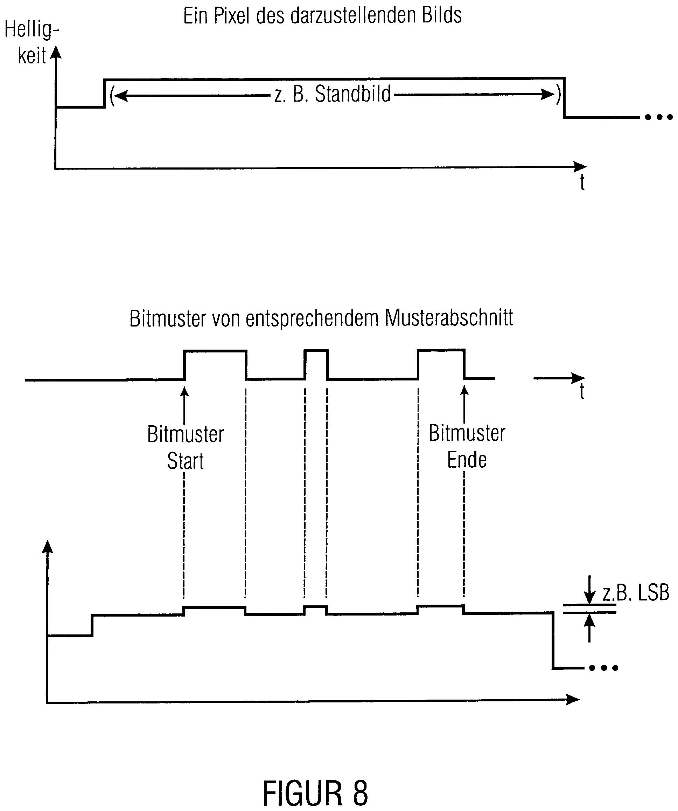

Fig. 8 veranschaulicht ein Prinzip zum Modulieren des darzustellenden Bildes 3 mit dem Positionsmuster bzw. dem Modulationsbild. Ein oberes Zeitdiagramm in Fig. 8 stellt schematisch den Helligkeitsverlauf eines Pixels des darzustellenden Bilds 3 über der Zeit dar. Der Einfachheit halber wird angenommen, dass der Helligkeitswert für dieses Pixel in einem bestimmten Zeitintervall konstant bleibt, zum Beispiel weil das darzustellende Bild 3 während dieses Zeitintervalls ein Standbild ist. Allgemein ist es jedoch nicht erforderlich, dass das darzustellende Bild ein Standbild ist. Vielmehr können auch dynamische Bilder wie z.B. ein Fernsehbild oder ein Video-codiertes Bild verwendet werden, bei dem sich der Helligkeitswert in der Regel ständig ändert. Weiterhin ist darauf hinzuweisen, dass der Helligkeitswert nur als Beispiel für eine Bildeigenschaft des darzustellenden Bilds anzusehen ist, und dass andere Bildeigenschaften ebenfalls verwendet werden können.

In der Mitte zeigt Fig. 8 ein Bitmuster eines Musterabschnitts, der dem oben erwähnten Pixel des darzustellenden Bilds entspricht, d.h. der Musterabschnitt ist einem Bereich des darzustellenden Bilds zugeordnet, in dem sich das erwähnte Pixel befindet. Das Bitmuster ist ein binäres zeitliches Muster, das sich zwischen einem Bitmusterstart und einem Bitmusterende erstreckt.

Ein Modulieren des darzustellenden Bilds mit dem Positionsmuster bzw. dem Modulationsbild führt zu einem Helligkeitsverlauf, der als Beispiel in einem unteren Zeitdiagramm von Fig. 8 schematisch dargestellt ist. Das Bitmuster des Musterabschnitts führt zu einer Veränderung des Helligkeitswerts des Pixels, wobei eine Amplitude der Helligkeitsänderung zum Beispiel einem niedrigstwertigen Bit (englisch: "least significant bit", LSB) entspricht. Zum Beispiel kann die Helligkeitsinformation des Pixels oder die Intensitätsinformation eines Farbkanals des Pixels eine Auflösung von 256 verschiedenen Helligkeits- bzw. Intensitätsstufen aufweisen. Wenn die Amplitude der Modulation dem niedrigwertigen Bit LSB entspricht, so ist das Verhältnis zwischen Modulationsamplitude und Bitauflösung des darzustellenden Bilds bzw. eines Farbkanals davon circa 0,4%. Eine derart kleine Modulation gegenüber der gesamten Bitauflösung des darzustellenden Bilds ist typischerweise nicht von einem menschlichen Betrachter wahrnehmbar. Es kann sogar sein, dass selbst Werte von 10% für das Verhältnis zwischen Modulationsamplitude und Bitauflösung noch unterhalb der menschlichen Wahrnehmungsschwelle liegen, insbesondere wenn die Modulation zeitlich und/oder räumlich verteilt wird, so dass es dem menschlichen Betrachter nicht auffällt oder nur unwesentlich auffällt. Weitere mögliche Werte für das Verhältnis zwischen Modulationsamplitude und Helligkeits- bzw. Intensitäts-Auflösung (die sogenannte "Modulationstiefe") sind 5%, 3%, 2% und 1%.

Die Kombinationseinheit 14 bzw. der Bildmodulator 24 können konfiguriert sein, das darzustellende Bild 3 kurzzeitig konstant zu halten, also sozusagen "einzufrieren", um auf diese Weise ein Standbild zu erzeugen und die Erkennung des Positionsmusters durch die Bestimmungseinrichtung 17 bzw. die Auswerteeinheit 27 zu verbessern.

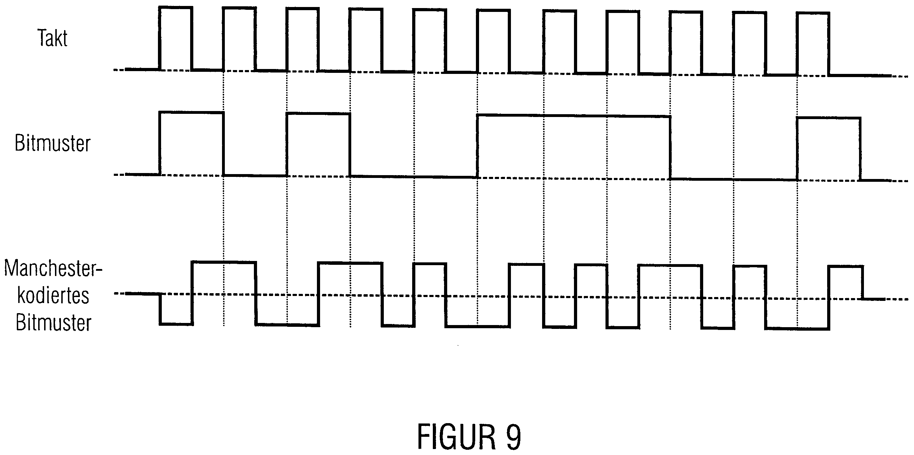

Fig. 9 stellt schematisch eine Umwandlung eines zeitlichen Bitmusters in ein Manchestercodiertes Bitmuster dar. Das Manchester-codierte Bitmuster kann z.B. durch eine XOR-Verknüpfung eines Taktsignals mit dem Bitmuster gewonnen werden. Anders ausgedrückt moduliert das Bitmuster binär die Phasenlage eines Taktsignals. Eine weitere mögliche Interpretation des Manchester-Codes ist, dass die Flanken des Manchester-codierten Bitmusters, bezogen auf das Taktsignal, die Information tragen. Gemäß der in Fig. 9 verwendeten Code-Definition nach IEEE 802.3, bedeutet eine fallende Flanke eine logische 0 und eine steigende Flanke eine logische 1. Somit gibt es in jedem Fall mindestens eine Flanke pro Bit, aus der das Taktsignal abgeleitet werden kann. Der Manchester-Code ist selbstsynchronisierend und unabhängig vom Gleichspannungspegel. Wie bereits oben erwähnt, kann der Übergang der Modulation von 0 nach 1 bzw. von 1 nach 0 erkannt werden, und zwar unabhängig von einem aktuellen absoluten Helligkeitspegel des darzustellenden Bilds bzw. eines Pixels davon.

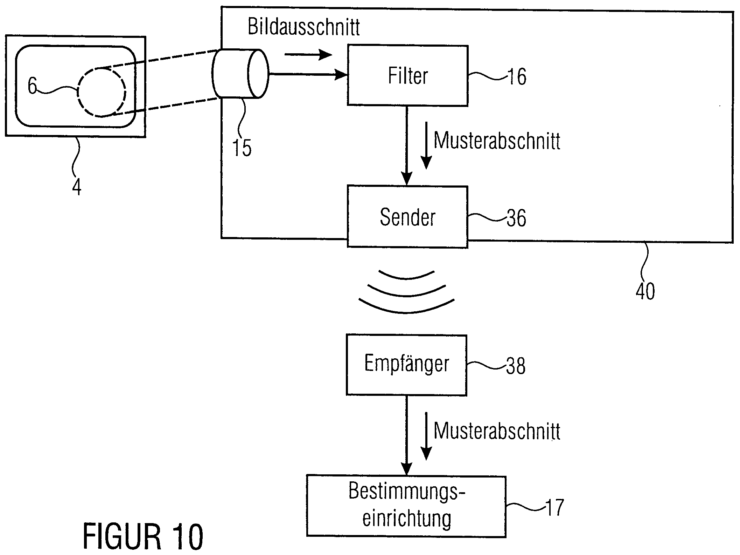

Fig. 10 zeigt ein schematisches Blockschaltbild einer Vorrichtung zum Bestimmen einer Position eines Objekts gemäß einem weiteren Ausführungsbeispiel der hierin offenbarten technischen Lehre. Die Vorrichtung zum Bestimmen der Position umfasst eine erste separate Einheit 40, die wiederum den optischen Sensor 15, das Filter 16 und einen Sender 36 umfasst. Die separate Einheit 40 ist eigenständig bezüglich einer weiteren möglichen separaten Einheit, die die Bestimmungseinrichtung und einen Empfänger 38 umfasst. Der Sender 36 ist konfiguriert zum Senden von Objektpositionsdaten oder von Zwischendaten, die für das Bestimmen der Position des Objekts benötigt werden. Zwischendaten sind somit Daten, die im Rahmen einer Informationsübermittlung von dem optischen Sensor an die Bestimmungseinrichtung 17 auftreten. Die separate Einheit 40 kann insbesondere an das Objekt 5 gekoppelt werden oder in dieses integriert werden. Auf diese Weise kann das Objekt mitsamt der separaten Einheit 40 in Bezug auf die Darstellung des darzustellenden Bilds mittels der Anzeigevorrichtung 4 bewegt werden. Der Empfänger 38 und die Bestimmungseinrichtung 17 können dagegen relativ ortsfest bezüglich der Anzeigevorrichtung und/oder einem daran angeschlossenen Computersystem (Bilddatenquelle (z.B. DVD-Abspielgerät, Videorecorder, Fernsehempfänger etc.)) sein. Das Senden der Objektpositionsdaten oder der Zwischendaten von dem Sender 36 zu dem Empfänger 38 kann zum Beispiel auf der Grundlage von Funksignalen, Infrarotsignalen, Ultraschallsignalen oder weiteren möglichen Übertragungstechniken erfolgen.

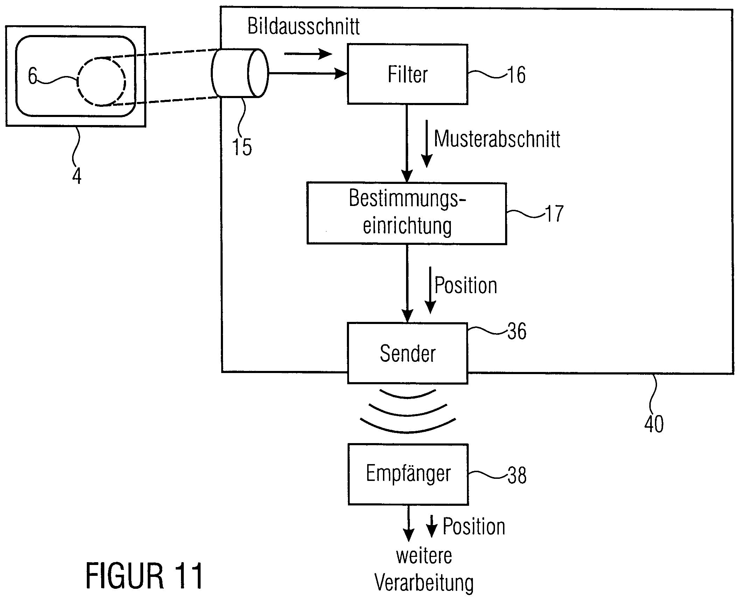

Fig. 11 zeigt ein schematisches Blockschaltbild einer Vorrichtung zum Bestimmen der Position eines Objekts, die ähnlich aufgebaut ist, wie die Vorrichtung gemäß dem in Fig. 10 gezeigten Ausführungsbeispiel. Bei dem in Fig. 11 gezeigten Ausführungsbeispiel umfasst die erste separate Einheit 40 jedoch auch die Bestimmungseinrichtung 17, so dass die Positionsdaten innerhalb der separaten Einheit 40 ermittelt werden können. Der Sender 36 sendet somit die Positionsdaten an den Empfänger 38, welche dieser für eine weitere Verarbeitung, z.B. einem Computersystem, einem anderen System oder einer graphischen Benutzeroberfläche zur Verfügung stellt.

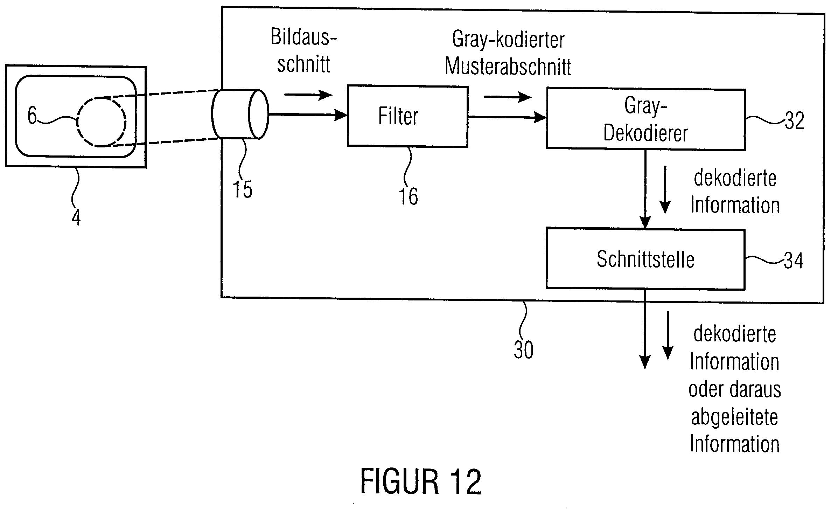

Fig. 12 zeigt ein schematisches Blockschaltbild der Anzeigevorrichtung 4 und einer Mustererfassungsvorrichtung 30 gemäß einem weiteren Ausführungsbeispiel der hierin offenbarten technischen Lehre. Die Mustererfassungsvorrichtung 30 umfasst den optischen Sensor 15, das Filter 16, einen Gray-Decodierer 32 und eine Schnittstelle 34. Ähnlich wie im Zusammenhang mit der Vorrichtung zum Bestimmen der Position des Objekts beschrieben, ist der optische Sensor 15 konfiguriert zum optischen Erfassen eines Bildausschnitts 6 eines Kombinationsbilds, das eine Kombination eines darzustellenden Bilds und eines Positionsmusters umfasst. Der Bildausschnitt oder den Bildausschnitt beschreibende Daten werden von dem optischen Sensor 15 an das Filter 16 übermittelt. Das Filter 16 ist konfiguriert zum Extrahieren zumindest eines Gray-codierten Musterabschnitts des Positionsmusters aus dem Bildabschnitt 6 bzw. den entsprechenden Bildabschnittinformationen. Der Gray-Decodierer 32 ist konfiguriert zum Decodieren des Gray-codierten Musterabschnitts und zum Bereitstellen einer decodierten Information. Das Filter 16 und der Gray-Decodierer 32 können auch zusammenarbeiten bzw. in einer Einheit integriert sein, da das Extrahieren des zumindest einen Gray-codierten Musterabschnitts von Informationen profitieren kann, die im Zusammenhang mit dem Decodieren des Gray-codierten Musterabschnitts ermittelt werden, bzw. von den decodierten Informationen am Ausgang des Gray-Decodierers 32. Die decodierte Information wird von dem Gray-Decodierer 32 an die Schnittstelle 34 weitergeleitet, welche diese oder eine daraus abgeleitete Information für eine weitere Verarbeitung außerhalb der Mustererfassungsvorrichtung 30 bereitstellt. Die Mustererfassungseinrichtung 30 kann beispielsweise auf ähnliche Weise verwendet werden wie die erste separate Einheit 40, die in den Figuren 10 und 11 dargestellt und beschrieben wurde. Somit kann die Mustererfassungsvorrichtung 30 an das Objekt 5 angekoppelt sein oder in dieses integriert sein, um die Positionserfassung für das Objekt 5 zu ermöglichen. Die Schnittstelle 34 kann ein Funksender, ein Infrarot-Sender, ein Ultraschallsender, eine Kabelverbindung oder eine andere geeignete Schnittstelle zur Übertragung von Informationen an einen externen Empfänger sein.

Ein Positionsmusteranteil in dem Kombinationsbild kann so gewählt sein, dass er unterhalb einer menschlichen Wahrnehmungsschwelle ist. Ferner kann der Positionsmusteranteil definierte Eigenschaften bezüglich einer Amplitude, einer Farbinformation, einer räumlichen Frequenz und/oder einer zeitlichen Frequenz haben. Das Filter 16 kann konfiguriert sein, Bildanteile aus dem Kombinationsbild zu extrahieren, die den definierten Eigenschaften des Positionsmusteranteils entsprechen. Insbesondere kann der Positionsmusteranteil in dem Kombinationsbild in einer geringfügigen Modulation des darzustellenden Bilds (z.B. zeitliche Modulation, räumliche Modulation oder zeitlich-räumliche Modulation) bestehen, so dass der Positionsmusteranteil nur eine beschränkte Amplitude z.B. im Hinblick auf einen Helligkeitswert oder einen Intensitätswert hat.

Wenn das Kombinationsbild auf einer Modulation des darzustellenden Bilds und des Positionsmusters basiert, kann das Filter 16 einen Demodulator zum Demodulieren des Kombinationsbilds umfassen.

Das Positionsmuster kann zumindest eine zeitliche Synchronisationsinformation enthalten und die Mustererfassungseinrichtung kann eine Synchronisationseinrichtung zum Synchronisieren der Mustererfassungseinrichtung 30 auf der Basis der Synchronisationsinformation umfassen.

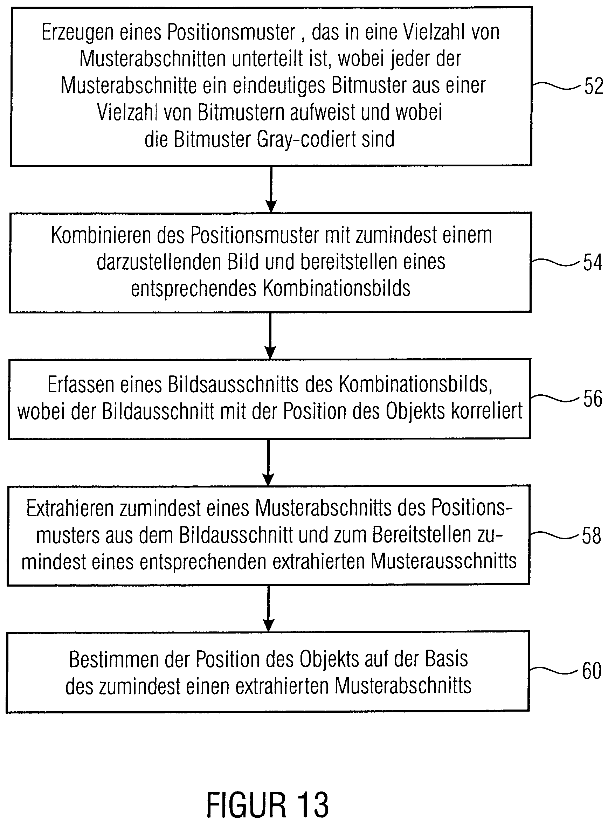

Fig. 13 zeigt ein schematisches Flussdiagramm eines Verfahrens zum Bestimmen einer Position eines Objekts gemäß zumindest einem Ausführungsbeispiel der hierin offenbarten technischen Lehre. In einem Schritt 52 wird ein Positionsmuster erzeugt, das in eine Vielzahl von Musterabschnitten unterteilt ist, wobei jeder der Musterabschnitte ein eindeutiges Bitmuster aus einer Vielzahl von Bitmustern aufweist. Die Bitmuster sind gray-codiert. Das Positionsmuster kann entweder dynamisch erzeugt werden oder so erzeugt werden, dass ein gespeichertes Positionsmuster aus einem Speicher ausgelesen und für eine weitere Verarbeitung bereitgestellt wird. Die Gray-Codierung der Bitmuster ist so zu verstehen, dass sich zwei Bitmuster, die zu benachbarten Musterabschnitten gehören, maximal in einer bestimmten Anzahl von Bits unterscheiden. Gemäß der klassischen Gray-Codierung unterscheiden sich die Bitmuster benachbarter Musterabschnitte in nur einem Bit voneinander. Gemäß einer verallgemeinerten Definition der Gray-Codierung können sich auch mehrere Bits der Bitmuster von einem Musterabschnitt zum benachbarten Musterabschnitt ändern, wobei jedoch eine Obergrenze typischerweise nicht überschritten wird. Insbesondere kann vorgesehen sein, dass sich stets die gleiche Anzahl von Bits von einem Musterabschnitt zu benachbarten Musterabschnitten ändert, z.B. immer zwei Bits oder drei Bits. Auf diese Weise sind die Bitmuster benachbarter Musterabschnitte zueinander ähnlich. Aufgrund der Gray-Codierung kommt es zu keinen abrupten Änderungen in der Codierung der Bitmuster, so wie sie z.B. bei einer herkömmlichen binären Codierung auftreten, wenn ein Übergang von einer Zweierpotenz zu der nächsthöheren Zweierpotenz erfolgt.

In einem Schritt 54 des Verfahrens wird das Positionsmuster mit zumindest einem darzustellenden Bild kombiniert und ein entsprechendes Kombinationsbild wird bereitgestellt. Das zumindest eine darzustellende Bild kann ein Einzelbild aus einer Folge von darzustellenden Bildern sein, so dass das Positionsmuster zu verschiedenen Zeitpunkten mit verschiedenen darzustellenden Bildern kombiniert werden kann. Auch wenn sich durch die Veränderung des darzustellenden Bilds die spätere Erkennung des Positionsmusters eventuell erschwert, kann durch geeignete Maßnahmen die Positionsmustererkennung auf relativ zuverlässige Weise ermöglicht werden. In diesem Zusammenhang sind insbesondere eine Manchester-Codierung des Positionsmusters bzw. das regelmäßige Einfügen von Referenzbildern zu nennen, die nicht mit dem Positionsmuster kombiniert werden und somit z.B. mittels einer Differenzenbildung einen Rückschluss auf das Positionsmuster ermöglichen. Ein Bildausschnitt des Kombinationsbilds wird während eines Schritts 56 des Verfahrens zum Bestimmen der Objektposition erfasst. Der Bildausschnitt korreliert dabei mit der Position des Objekts. Dies bedeutet, dass bestimmten Positionen des Objekts bestimmte Bildausschnitte zugewiesen sind. Insbesondere kann es sein, dass das Objekt auf bzw. innerhalb einer Darstellung des darzustellenden Bilds platziert wird und somit einen Bildausschnitt verdeckt bzw. einnimmt. Dieser verdeckte bzw. von dem Objekt eingenommene Bildausschnitt kann dann dem erfassten Bildausschnitt entsprechen. Weiterhin ist es auch möglich, dass nur ein Teil des verdeckten bzw. von dem Objekt eingenommenen Bildausschnitts erfasst wird und als erfasster Bildausschnitt innerhalb des Verfahrens zur Positionsbestimmung weiterverwendet wird. In manchen Ausführungsbeispielen kann vorgesehen sein, dass nicht nur ein Bildausschnitt erfasst wird, sondern zwei Bildausschnitte oder mehr Bildausschnitte, die verschiedenen Bereichen des Objekts zugewiesen sind, zum Beispiel einem ersten Randbereich und einem zweiten Randbereich. Auf diese Weise wird es möglich, nicht nur die Position des Objekts zu bestimmen, sondern auch dessen Orientierung (Lage) in Bezug auf die Darstellung des darzustellenden Bilds, weil zwei oder mehr Positionsdaten für das Objekt vorliegen und ein Zusammenhang zwischen zwei oder mehr objektspezifischen Punkten und den zwei oder mehr ermittelten Positionsinformationen hergestellt werden kann.

In einem Schritt 58 des Verfahrens zum Bestimmen der Position wird zumindest ein Musterabschnitt des Positionsmusters aus dem Bildausschnitt extrahiert. Weiterhin wird ein entsprechender extrahierter Musterabschnitt für eine weitere Verarbeitung bereitgestellt. Das Extrahieren des Musterabschnitts kann mittels Verfahren der Mustererkennung erfolgen. Dabei ist hilfreich, dass aufgrund der Gray-Codierung der Bitmuster die Bitmuster relativ kurz sein können und sich eine Nachbarschaftsbeziehung zwischen zwei oder mehr Musterabschnitten auch in einer Ähnlichkeit der jeweiligen Bitmuster widerspiegelt. Da es vorkommen kann, dass der Bildausschnitt nicht nur einen Musterabschnitt erfasst, sondern zwei oder mehr Musterabschnitte, ist es möglich, dass zwei oder mehr Musterabschnitte erfasst werden. Aus dieser Information lässt sich ggf. eine Zwischenposition des Objekts ermitteln, wie nachfolgend noch beschrieben werden wird.

Die Position des Objekts wird in einem Schritt 60 des zumindest einen extrahierten Musterabschnitts bestimmt. Aufgrund der Unterteilung des Positionsmusters in die Vielzahl von Musterabschnitten und dem Kombinieren des Positionsmusters mit dem zumindest einen darzustellen Bild lässt sich ein Zusammenhang zwischen dem zumindest einen extrahierten Musterabschnitt und einem Punkt bzw. Bereich innerhalb des darzustellenden Bilds herstellen. Die Position des Objekts kann nun entweder mit diesem Punkt bzw. Bereich der Darstellung des darzustellenden Bilds übereinstimmen oder sie korreliert auf eine bestimmte, typischerweise vorbekannte Weise mit dem genannten Punkt bzw. Bereich.

Das Kombinieren des Positionsmusters mit dem zumindest einen darzustellenden Bild in Schritt 54 umfasst eine Modulation des darzustellenden Bilds mit dem Positionsmuster .

Weiterhin kann eine Erzeugung des Positionsmusters eine Manchester-Codierung des Positionsmusters umfassen.

Das Verfahren zum Bestimmen der Position des Objekts kann weiterhin ein Senden von Objektpositionsdaten oder Zwischendaten, die für das Bestimmen der Position benötigt werden, von einem Sender an einen Empfänger umfassen.

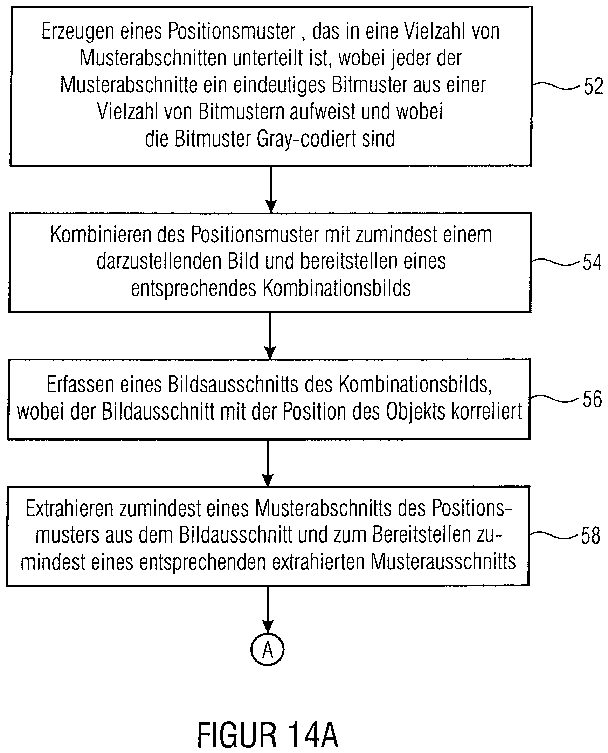

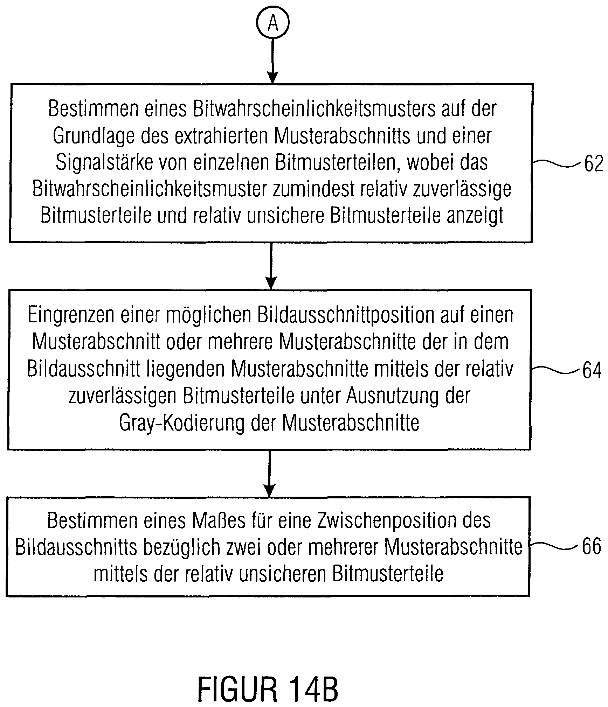

Figuren 14a und 14b zeigen ein schematisches Flussdiagramm eines weiteren möglichen Ausführungsbeispiels eines Verfahrens zum Bestimmen der Position eines Objekts. Das Verfahren umfasst die aus Fig. 13 bekannten Schritte 52-58, so dass auf deren Beschreibung im Zusammenhang mit der Beschreibung von Fig. 13 verwiesen wird. Der Schritt 60, wonach die Position des Objekts auf der Basis des zumindest einen extrahierten Musterabschnitts bestimmt wird, ist in den Schritten 62 bis 66 weiter im Detail beschrieben.

In einem Schritt 62 wird ein Bitwahrscheinlichkeitsmuster auf der Grundlage des extrahierten Musterabschnitts und einer Signalstärke von einzelnen Bitmusteranteilen bestimmt. Das Bitwahrscheinlichkeitsmuster zeigt relativ zuverlässige Bitmusterteile und relativ unsichere Bitmusterteile. Insbesondere kann neben einem vermutlichen Bitwert auch eine Zuverlässigkeit bzw. Konfidenz für den ermittelten Bitwert bestimmt werden. Die Bitwerte und Bitwahrscheinlichkeitswerte können zum Beispiel auch in Form von Zwischenwerten dargestellt werden, die zwischen zwei regulären Bitwerten liegen. Zum Beispiel können zwei reguläre Bitwerte eine logische "0" und eine logische "1" sein und Zwischenwerte in dem Intervall von 0 bis 1 können angeben, ob ein Bit mit höherer Wahrscheinlichkeit den logischen Wert "0" oder den logischen Wert "1" hat. Bei einem Zwischenwert von 0,5 ist zum Beispiel keine eindeutige Aussage darüber möglich, ob das entsprechende Bit den Bitwert "0" oder "1" hat. Um die Zwischenwerte darstellen zu können, kann der Bitwert als analoges Signal oder als digitales Signal mit höherer Auflösung (d.h. mehr Diskretisierungsstufen) als das eigentliche Bitmuster dargestellt sein.

In einem Schritt 64 wird eine mögliche Bildausschnittposition auf einen Musterabschnitt oder mehrere Musterabschnitte der in dem Bildausschnitt liegenden Musterabschnitte eingegrenzt, indem die relativ zuverlässigen Bitmusteranteile unter Ausnutzung der Gray-Codierung der Musterabschnitte ermittelt werden. Die relativ zuverlässigen Bitmusterteile können typischerweise so gedeutet werden, dass sie übereinstimmende Bitmusterteile der verschiedenen Bitmuster anzeigen, die zu den in dem Bildausschnitt vorhandenen Musterabschnitten gehören. Aufgrund der Eigenschaften der Gray-Codierung lässt sich so bereits eine ungefähre Position des Bildausschnitts ermitteln, wobei die Genauigkeit davon abhängt, wie viele Musterabschnitte maximal in dem von dem optischen Sensor erfassten Bildausschnitt vorhanden sein können.

Zusätzlich zu der gerade beschriebenen relativ groben Eingrenzung der möglichen Bildausschnittposition kann nun mittels der relativ unsicheren Bitmusterteile auch noch ein Maß für eine Zwischenposition des Bildausschnitts bezüglich zwei oder mehrerer Musterabschnitte bestimmt werden, wie in Schritt 66 des Verfahrens zum Bestimmen der Position des Objekts dargestellt. Zum Beispiel kann zu diesem Zweck ausgenutzt werden, dass sich die optischen Signale der in dem Bildausschnitt enthaltenen Musterabschnitte überlagern und ein entsprechendes überlagertes optisches Signal von dem optischen Sensor 15 erfasst wird. Insbesondere bei Helligkeits- und/oder Intensitätswerten, aber auch anderen Eigenschaften des optischen Signals, bestimmt ein in dem Bildausschnitt liegender Flächenanteil eines Musterabschnitts mit, zu welchem Anteil das von dem entsprechenden Musterabschnitt ausgesendete optische Signal in das von dem optischen Sensor 15 bereitgestellte Erfassungssignal mit eingeht. Das Erfassungssignal stellt zum Beispiel eine gewichtete Summe der einzelnen optischen Signale dar, die von den verschiedenen, mehr oder weniger in dem Bildausschnitt enthaltenen Musterabschnitten ausgestrahlt werden. Die Gewichtungsfaktoren sind dabei die Verhältnisse der jeweiligen in dem Bildausschnitt enthaltenen Musterabschnittteilflächen zu der Gesamtfläche des Bildausschnitts.

Eine Bildverarbeitungsvorrichtung gemäß zumindest einem Ausführungsbeispiel der hierin offenbarten technischen Lehre umfasst einen Eingang für ein darzustellendes Bild; einen Modulationsbildgenerator (22) zum Erzeugen zumindest eines Modulationsbildes, wobei das Modulationsbild in eine Vielzahl Feldern unterteilt ist und ein Modulationsbildwert eines bestimmten Feldes eine Ortsinformation des Feldes innerhalb des Modulationsbildes repräsentiert; einen Bildmodulator zum Modulieren des darzustellenden Bildes mit dem Modulationsbild, wobei ein Unterschied zwischen dem darzustellenden Bild und einem mit dem Modulationsbild modulierten Bild unterhalb einer menschlichen Wahrnehmungsschwelle ist; und einen Ausgang für das mit dem Modulationsbild modulierte Bild zur Anzeige auf einer Anzeigevorrichtung, die an den Ausgang anschließbar ist, so dass sich die Ortsinformation durch Auswerten des angezeigten und mit dem Modulationsbild modulierten Bild rekonstruieren lässt.

Abschließend werden einige technischen Merkmale der Bildverarbeitungsvorrichtung und der Vorrichtung zum Bestimmen einer Objektposition aufgezählt, die vorhanden sein können, aber nicht unbedingt müssten. Die Bildverarbeitungsvorrichtung und die Vorrichtung zum Bestimmen einer Position können insbesonder eines oder mehrere der folgenden Merkmale aufweisen.

Der Unterschied zwischen dem darzustellenden Bild und dem mit dem Modulationsbild modulierten Bild kann in einem für Menschen sichtbaren Wellenlängenbereich sein.

Dabei kann der Bildmodulator konfiguriert sein, das darzustellende Bild und das Modulationsbild additiv zu überlagern.

Bei der Bildverarbeitungsvorrichtung kann das darzustellende Bild eine Bitauflösung aufweisen und das Modulieren sich auf einen niederwertigen Teil der Bitauflösung auswirken. Insbesondere kann das Modulieren sich (nur) auf niedrigstwertige Bits von Bildpunkten des darzustellenden Bilds auswirkt.

Weiterhin kann das darzustellende Bild zumindest einen ersten Farbkanal und einen zweiten Farbkanal aufweisen und wobei der Modulationsbildgenerator (22) konfiguriert ist, eine erste räumliche Koordinate der Ortsinformation durch eine Modulation des ersten Farbkanals und eine zweite räumliche Koordinate der Ortsinformation durch eine Modulation des zweiten Farbkanals in dem Modulationsbild zu repräsentieren.

Dabei kann die Ortsinformation Gray-kodiert bezüglich aneinander angrenzender Felder des Modulationsbilds sein.

Dabei kann der Modulationsbildgenerator (22) konfiguriert sein, eine Folge von Modulationsbildern zu erzeugen, wobei die Ortsinformation, die von dem Modulationsbildwert des bestimmten Feldes eines bestimmten Modulationsbilds der Folge repräsentiert wird, ein Teil einer kombinierten Ortsinformation des bestimmten Feldes ist, so dass sich die kombinierte Ortsinformation aus den einzelnen Ortsinformationen der Folge von Modulationsbildern rekonstruieren lässt.

Dabei kann die Folge von Modulationsbildern zumindest ein zeitliches Synchronisationssignal umfassen.

Ferner kann der Bildmodulator einen Manchester-Kodierer umfassen, der konfiguriert ist, aus dem Modulationsbild in ein erstes Manchester-kodiertes Modulationsbild und ein zweites Manchester-kodiertes Modulationsbild zu erzeugen, wobei der Bildmodulator konfiguriert ist, das darzustellende Bild sukzessive mit dem ersten Manchester-kodierten Modulationsbild und dem zweiten Manchester-kodierten Modulationsbild zu modulieren und zwei entsprechende modulierte Bilder zur Anzeige auf der Anzeigevorrichtung zu erzeugen.

Der Bildmodulator kann eine Modulationstiefe bezüglich des darzustellenden Bilds haben, die kleiner oder gleich 10% einer Bitauflösung des darzustellenden Bilds ist.

Eine optische Sensorvorrichtung gemäß einem Ausführungsbeispiel kann umfassen: einen optischen Sensor zum Erfassen einer elektromagnetischen Strahlung zum Erzeugen eines entsprechenden Erfassungssignals; einen Demodulator, der konfiguriert ist, das Erfassungssignal zu demodulieren und ein gegebenenfalls in dem Erfassungssignal enthaltenes Modulationssignal zu bestimmen, wobei der Demodulator ein amplituden-sensitives Filter umfasst, das konfiguriert ist, zumindest eine von einer zeitlichen Änderung und einer örtlichen Änderung Erfassungssignalwerts, die eine Amplitude innerhalb des begrenzten Amplitudenbereichs hat, für eine weitere Verarbeitung zu extrahieren.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres erläuterndes Beispiel ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (20) zum Bestimmen einer Position eines Objekts (5) innerhalb einer Anzeige eines darzustellenden Bildes (3) mit folgenden Merkmalen:
einem Eingang (11) für das darzustellende Bild;
einem Modulationsbildgenerator (22) zum Erzeugen zumindest eines Modulationsbilds, wobei das zumindest eine Modulationsbild in eine Vielzahl von Feldern unterteilt ist und ein Modulationsbildwert eines bestimmten Feldes eine Ortsinformation des Felds innerhalb des Modulationsbilds repräsentiert;
einem Bildmodulator (24) zum Modulieren des darzustellenden Bilds (3) mit dem Modulationsbild, wobei ein Unterschied zwischen dem darzustellenden Bild und dem mit dem zumindest einen Modulationsbild modulierten Bild unterhalb einer menschlichen Wahrnehmungsschwelle ist, wobei das Modulieren des darzustellenden Bilds (3) mit dem Modulationsbild so gestaltet ist, dass aufgrund einer geringen Modulationstiefe die Modulation unterhalb der menschlichen Wahrnehmungsschwelle bleibt;
einem Ausgang für das mit dem zumindest einen Modulationsbild modulierte Bild zur Anzeige auf einer Anzeigevorrichtung (4);
einen optischen Sensor (15) zum Erfassen eines optischen Signals, das von einem Bildausschnitt des mit dem Modulationsbild modulierten Bild ausgesendet wird, und zum Erzeugen eines entsprechenden Erfassungssignals; und
einer Auswerteeinheit (27) zum Bestimmen einer Bildausschnitt-Ortsinformation anhand des von dem Bildausschnitt ausgesendeten optischen Signals, indem die Auswerteeinheit konfiguriert ist, eine Ortsinformation von zumindest einem zumindest teilweise in dem Bildausschnitt befindlichen Felds aus dem von dem Bildausschnitt ausgesendeten optischen Signal zu extrahieren;
wobei die Ortsinformationen verallgemeinert Gray-kodiert bezüglich zueinander benachbarter Felder ist;
wobei die Auswerteinheit (27) konfiguriert ist, eine extrahierte, nicht eindeutig einem Feld zuordenbare Ortsinformation auszuwerten, indem relativ eindeutige Bitwerte von Bits der Ortsinformation zur Eingrenzung eines räumlichen Bereichs, in dem sich der Bildausschnitt befindet, ausgewertet werden und relativ indifferente Bitwerte von Bits der Ortsinformation andeuten, dass der Bildausschnitt zumindest zwei Felder des Modulationsbildes überlappt;
wobei die Auswerteinheit (27) konfiguriert ist, eine gewichtete Summe von Bitwerten von Bits der Ortsinformation zu erhalten, um Bitwerte oder Bit-Zwischenwerte zu erhalten; wobei eine jeweilige Gewichtung von Bitwerten von Bits der Ortsinformation in der gewichteten Summe einem Flächenanteil eines zu einer jeweiligen Ortsinformation zugehörigen Feldes am Bildausschnitt entspricht;
wobei die Auswerteinheit (27) konfiguriert ist, um die Auswertung mittels eines ersten und eines zweiten Schwellwertes durchzuführen,
sodass ein Bit-Zwischenwert, der unterhalb des ersten oder oberhalb des zweiten Schwellwerts liegt, als relativ eindeutiger Bitwert bewertet wird; und
sodass ein Bit-Zwischenwert, der zwischen dem ersten und zweiten Schwellwert liegt als relativ indifferenter Bitwert bewertet wird

2. Vorrichtung (20) gemäß Anspruch 1, wobei die Auswerteeinheit (27) einen Demodulator umfasst, der konfiguriert ist, das Erfassungssignal zu demodulieren und ein gegebenenfalls in dem Erfassungssignal enthaltenes Modulationssignal für das zumindest eine zumindest teilweise in dem Bildausschnitt befindliche Feld zu bestimmen, wobei sich die Ortsinformation des Felds aus dem Modulationssignal ergibt.

3. Vorrichtung (20) gemäß einem der Ansprüche 1 bis 2, wobei das Modulieren des darzustellenden Bilds (3) mit dem Modulationsbild einen begrenzten Amplitudenbereich aufweist und die Auswerteeinheit ein amplituden-sensitives Filter umfasst, das konfiguriert ist, zumindest eine von einer zeitlichen Änderung und einer örtlichen Änderung des Modulationsbildwerts, die eine Amplitude innerhalb des begrenzten Amplitudenbereichs hat, zu extrahieren.

4. Vorrichtung (20) gemäß einem der Ansprüche 1 bis 3, wobei der Unterschied zwischen dem darzustellenden Bild und dem mit dem Modulationsbild modulierten Bild in einem für Menschen sichtbaren Wellenlängenbereich ist.

5. Vorrichtung (20) gemäß einem der Ansprüche 1 bis 4, wobei das zumindest eine Modulationsbild zumindest ein zeitliches Synchronisationssignal umfasst.

6. Vorrichtung (20) gemäß einem der Ansprüche 1 bis 5, wobei der Bildmodulator (24) einen Manchester-Kodierer umfasst, der konfiguriert ist, aus dem Modulationsbild in ein erstes Manchester-kodiertes Modulationsbild und ein zweites Manchester-kodiertes Modulationsbild zu erzeugen, wobei der Bildmodulator (24) konfiguriert ist, das darzustellende Bild (3) sukzessive mit dem ersten Manchester-kodierten Modulationsbild und dem zweiten Manchester-kodierten Modulationsbild zu modulieren und zwei entsprechende modulierte Bilder zur Anzeige auf der Anzeigevorrichtung (4) zu erzeugen.

7. Verfahren zum Bestimmen einer Position eines Objekts (5) innerhalb einer Anzeige eines darzustellenden Bildes (3) mit folgenden Merkmalen:
Bereitstellen des darzustellenden Bildes;
Erzeugen zumindest eines Modulationsbilds, mittels eines Modulationsbildgenerators (22), wobei das zumindest eine Modulationsbild in eine Vielzahl von Feldern unterteilt ist und ein Modulationsbildwert eines bestimmten Feldes eine Ortsinformation des Felds innerhalb des Modulationsbilds repräsentiert;
wobei die Ortsinformationen verallgemeinert Gray-kodiert bezüglich zueinander benachbarter Felder ist;
Modulieren des darzustellenden Bilds (3) mit dem Modulationsbild, mittels des Bildmodulators (24), wobei ein Unterschied zwischen dem darzustellenden Bild und dem mit dem zumindest einen Modulationsbild modulierten Bild unterhalb einer menschlichen Wahrnehmungsschwelle ist, wobei das Modulieren des darzustellenden Bilds (3) mit dem Modulationsbild so gestaltet ist, dass aufgrund einer geringen Modulationstiefe die Modulation unterhalb der menschlichen Wahrnehmungsschwelle bleibt;
Anzeigen des mit dem zumindest einen Modulationsbild modulierten Bildes auf einer Anzeigevorrichtung (4);
Erfassen eines optischen Signals, das von einem Bildausschnitt des mit dem Modulationsbild modulierten Bild ausgesendet wird, und Erzeugen eines entsprechenden Erfassungssignals, mittels eines optischen Sensor (15); und
Bestimmen einer Bildausschnitt-Ortsinformation, mittels einer Auswerteeinheit (27), anhand des von dem Bildausschnitt ausgesendeten optischen Signals, indem eine Ortsinformation von zumindest einem zumindest teilweise in dem Bildausschnitt befindlichen Felds aus dem von dem Bildausschnitt ausgesendeten optischen Signal extrahiert wird;
Auswerten, mittels der Auswerteinheit (27), einer extrahierten, nicht eindeutig einem Feld zuordenbare Ortsinformation, indem relativ eindeutige Bitwerte von Bits der Ortsinformation zur Eingrenzung eines räumlichen Bereichs, in dem sich der Bildausschnitt befindet, ausgewertet werden und relativ indifferente Bitwerte von Bits der Ortsinformation andeuten, dass der Bildausschnitt zumindest zwei Felder des Modulationsbildes überlappt;
Erhalten, mittels der Auswerteinheit (27), einer gewichteten Summe von Bitwerten von Bits der Ortsinformation, um Bitwerte oder Bit-Zwischenwerte zu erhalten wobei eine jeweilige Gewichtung von Bitwerten von Bits der Ortsinformation einem Flächenanteil eines zu einer jeweiligen Ortsinformation zugehörigen Feldes am Bildausschnitt entspricht;
Durchführen der Auswertung mittels eines ersten und eines zweiten Schwellwertes, Bewerten eines Bit-Zwischenwertes, der unterhalb des ersten oder oberhalb des zweiten Schwellwerts liegt, als relativ eindeutiger Bitwert; und
Bewerten eines Bit-Zwischenwert, der zwischen dem ersten und zweiten Schwellwert liegt als relativ indifferenter Bitwert.

8. Computerprogramm mit einem Programmcode zum Ausführen des Verfahrens gemäß Patentanspruch 7, wenn das Computerprogramm auf einer Vorrichtung nach Anspruch 1 läuft.

## Claims

1. An apparatus (20) for determining a position of an object (5) within a representation of an image (3) to be represented, comprising:
an input (11) for the image to be represented;
a modulation image generator (22) for generating at least one modulation image, the at least one modulation image being subdivided into a plurality of fields and a modulation image value of a certain field representing location information of the field within the modulation image;
an image modulator (24) for modulating the image (3) to be represented with the modulation image, a difference between the image to be represented and the image modulated with the at least one modulation image being below a threshold of perception of humans; wherein modulating the image (3) to be represented with the modulation image is configured such that, due to a low modulation depth, the modulation remains below the threshold of perception of humans;
an output for the image modulated with the at least one modulation image for being displayed on a display apparatus (4);
an optical sensor (15) for sensing an optical sensor emitted from an image section of the image modulated with the modulation image, and for generating a corresponding sense signal; and
an evaluation unit (27) for determining image section location information using the optical signal emitted by the image section, by the evaluation unit being configured to extract a piece of location information of at least one field located at least partly within the image section, from the optical signal emitted by the image section;
wherein the location information is Gray-coded in a generalized manner relative to mutually adjacent fields.
wherein the evaluation unit (27) is configured to evaluate extracted location information which cannot be associated unambiguously to a field, by evaluating relatively unambiguous bit values of bits of the location information for limiting a spatial region within which the image section is located, and by relatively indifferent bit values of bits of the location information indicating that the image section overlaps at least two fields of the modulation image.
wherein the evaluation unit (27) is configured to obtain a weighted sum of bit values of bits of the location information to obtain bit values or bit intermediate values; wherein a respective weight of bit values of bits of the location information in the weighted sum corresponds at the image section to an area portion of a field associated with respective location information;
wherein the evaluation unit (27) is configured to perform the evaluation by means of a first and second threshold,
so that a bit intermediate value below the first or above the second threshold is evaluated to be a relatively unambiguous bit value; and
so that a bit intermediate value between the first and second thresholds is evaluated to be a relatively indifferent bit value.

2. The apparatus (20) in accordance with claim 1, wherein the evaluation unit (27) includes a demodulator configured to demodulate the sense signal and to determine a modulation signal potentially contained in the sense signal for the at least one field located at least partly within the image section, the location information of the field resulting from the modulation signal.

3. The apparatus (20) in accordance with any of claims 1 to 2, wherein modulating the image (3) to be represented with the modulation image has a limited amplitude range and the evaluation unit includes an amplitude-sensitive filter configured to extract at least one of a temporal change and a spatial change of the modulation image value which has an amplitude within the limited amplitude range.

4. The apparatus (20) in accordance with claim 1 to 3, wherein the difference between the image to be represented and the image modulated with the modulation image is within a wavelength range visible for humans.

5. The apparatus (20) in accordance with any of claims 1 to 4, wherein the at least one modulation image includes at least a temporal synchronization signal.

6. The apparatus (20) in accordance with any of claims 1 to 5, wherein the image modulator (24) includes a Manchester coder configured to generate from the modulation image a first Manchester-coded modulation image and a second Manchester-coded modulation image, the image modulator (24) being configured to modulate the image (3) to be represented successfully with the first Manchester-coded modulation image and the second Manchester-coded modulation image and to generate two corresponding modulated images for being displayed on the display apparatus (4).

7. Method for determining a position of an object (5) within a representation of an image (3) to be represented, comprising:
providing the image to be represented;
generating at least one modulation image, by means of a modulation image generator (22), the at least one modulation image being subdivided into a plurality of fields and a modulation image value of a certain field representing location information of the field within the modulation image;
wherein the location information is Gray-coded in a generalized manner relative to mutually adjacent fields.
modulating the image (3) to be represented with the modulation image, by means of the image modulator (24), a difference between the image to be represented and the image modulated with the at least one modulation image being below a threshold of perception of humans, wherein modulating the image (3) to be represented with the modulation image is configured such that, due to a low modulation depth, the modulation remains below the threshold of perception of humans;
displaying the image modulated with the at least one modulation image on a display apparatus (4);
sensing an optical sensor emitted from an image section of the image modulated with the modulation image, and generating a corresponding sense signal, by means of an optical sensor (15); and
determining image section location information, by means of an evaluation unit (27), using the optical signal emitted by the image section, by a piece of location information of at least one field located at least partly within the image section being extracted from the optical signal emitted by the image section;
evaluating, by means of the evaluation unit (27), extracted location information which cannot be associated unambiguously to a field, by evaluating relatively unambiguous bit values of bits of the location information for limiting a spatial region within which the image section is located, and by relatively indifferent bit values of bits of the location information indicating that the image section overlaps at least two fields of the modulation image.
obtaining, by means of the evaluation unit (27), a weighted sum of bit values of bits of the location information to obtain bit values or bit intermediate values, wherein a respective weight of bit values of bits of the location information in the weighted sum corresponds at the image section to an area portion of a field associated with respective location information;
performing the evaluation by means of a first and second threshold,
evaluating a bit intermediate value below the first or above the second threshold to be a relatively unambiguous bit value; and
evaluating a bit intermediate value between the first and second thresholds to be a relatively indifferent bit value.

8. Computer program with a program code for performing the method in accordance with claim 7 when the computer program runs on an apparatus in accordance with claim 1.

## Revendications

1. Dispositif (20) de détermination d'une position d'un objet (5) dans un affichage d'une image (3) à représenter, aux caractéristiques suivantes:
une entrée (11) pour l'image à représenter;
un générateur d'image de modulation (22) destiné à générer au moins une image de modulation, où l'au moins une image de modulation est subdivisée en une pluralité de champs et une valeur d'image de modulation d'un champ déterminé représente une information de localisation du champ dans l'image de modulation;
un modulateur d'image (24) destiné à moduler l'image (3) à représenter par l'image de modulation, où une différence entre l'image à représenter et l'image modulée par l'au moins une image de modulation se situe au-dessous d'un seuil de perception humaine, où la modulation de l'image (3) à représenter par l'image de modulation est conçue de sorte que la modulation reste, du fait d'une faible profondeur de modulation, au-dessous du seuil de perception humaine;
une sortie pour l'image modulée par l'au moins une image de modulation pour l'affichage sur un dispositif d'affichage (4);
un capteur optique (15) destiné à détecter un signal optique qui est émis à partir d'une découpe d'image de l'image modulée par l'image de modulation et à générer un signal de détection correspondant; et
une unité d'évaluation (27) destinée à déterminer une information de localisation de découpe d'image à l'aide du signal optique émis par la découpe d'image, où l'unité d'évaluation est configurée pour extraire du signal optique émis par la découpe d'image une information de localisation d'au moins un champ se trouvant au moins partiellement dans la découpe d'image;
dans lequel l'information de localisation est codée de manière généralisée selon Gray en ce qui concerne les champs adjacents l'un à l'autre;
dans lequel l'unité d'évaluation (27) est configurée pour évaluer une information de localisation extraite qui ne peut pas être associée de manière univoque à un champ en ce que sont évaluées les valeurs binaires relativement univoques de bits de l'information de localisation pour délimiter une zone spatiale dans laquelle se trouve la découpe d'image et des valeurs binaires relativement indifférentes des bits de l'information de localisation indiquent que la découpe d'image vient en chevauchement avec au moins deux champs de l'image de modulation;
dans lequel l'unité d'évaluation (27) est configurée pour obtenir une somme pondérée de valeurs binaires des bits de l'information de localisation pour obtenir des valeurs binaires ou des valeurs binaires intermédiaires; dans lequel une pondération respective des valeurs binaires des bits de l'information de localisation dans la somme pondérée correspond à une part de surface d'un champ sur la découpe d'image associée à une information de localisation respective;
dans lequel l'unité d'évaluation (27) est configurée pour effectuer l'évaluation à l'aide d'une première et d'une deuxième valeur de seuil,
de sorte qu'une valeur binaire intermédiaire qui se situe au-dessous de la première valeur de seuil ou au-dessus de la deuxième valeur de seuil soit évaluée comme une valeur binaire relativement univoque; et
de sorte qu'une valeur binaire intermédiaire qui se situe entre la première et la deuxième valeur de seuil soit évaluée comme une valeur binaire relativement indifférente.

2. Dispositif (20) selon la revendication 1, dans lequel l'unité d'évaluation (27) comporte un démodulateur qui est configuré pour démoduler le signal de détection et pour déterminer un signal de modulation qui est éventuellement contenu dans le signal de détection pour l'au moins un champ situé au moins partiellement dans la découpe d'image, dans lequel l'information de localisation du champ résulte du signal de modulation.

3. Dispositif (20) selon l'une des revendications 1 à 2, dans lequel la modulation de l'image à représenter (3) par l'image de modulation présente une plage d'amplitudes limitée et l'unité d'évaluation comporte un filtre sensible à l'amplitude qui est configuré pour extraire au moins une parmi une variation dans le temps et une variation locale de la valeur d'image de modulation qui présente une amplitude dans la plage d'amplitudes limitée.

4. Dispositif (20) selon l'une des revendications 1 à 3, dans lequel la différence entre l'image à représenter et l'image modulée par l'image de modulation se situe dans une plage de longueurs d'onde visible par l'homme.

5. Dispositif (20) selon l'une des revendications 1 à 4, dans lequel l'au moins une image de modulation comporte au moins un signal de synchronisation dans le temps.

6. Dispositif (20) selon l'une des revendications 1 à 5, dans lequel le modulateur d'image (24) comporte un codeur de Manchester qui est configuré pour générer, à partir de l'image de modulation, une première image de modulation codée selon Manchester et une deuxième image de modulation codée selon Manchester, dans lequel le modulateur d'image (24) est configuré pour moduler l'image (3) à représenter successivement par la première image de modulation codée selon Manchester et la deuxième image de modulation codée selon Manctiester et pour générer deux images modulées correspondantes destinées à être affichées sur le dispositif d'affichage (4).

7. Procédé de détermination d'une position d'un objet (5) dans un affichage d'une image (3) à représenter, aux caractéristiques suivantes consistant à:
fournir l'image à représenter;
générer au moins une image de modulation, au moyen d'un générateur d'image de modulation (22), où l'au moins une image de modulation est subdivisée en une pluralité de champs et une valeur d'image de modulation d'un champ déterminé représente une information de localisation du champ dans l'image de modulation;
dans lequel l'information de localisation est codée de manière généralisée selon Gray en ce qui concerne les champs adjacents l'un à l'autre;
moduler l'image (3) à représenter par l'image de modulation, au moyen du modulateur d'image (24), où une différence entre l'image à représenter et l'image modulée par l'au moins une image de modulation se situe au-dessous d'un seuil de perception humaine, où la modulation de l'image (3) à représenter par l'image de modulation est conçue de sorte que la modulation reste, du fait d'une faible profondeur de modulation, au-dessous du seuil de perception humaine;
afficher l'image modulée par l'au moins une image de modulation sur un dispositif d'affichage (4);
détecter un signal optique qui est émis à partir d'une découpe d'image de l'image modulée par l'image de modulation, et générer un signal de détection correspondant au moyen d'un capteur optique (15); et
déterminer une information de localisation de découpe d'image, au moyen d'une unité d'évaluation (27), à l'aide du signal optique émis par la découpe d'image, en extrayant, du signal optique émis par la découpe d'image, une information de localisation d'au moins un champ situé au moins partiellement dans la découpe d'image;
évaluer, au moyen de l'unité d'évaluation (27), une information de localisation extraite qui ne peut pas être associée de manière univoque à un champ, en ce que sont évaluées les valeurs binaires relativement univoques de bits de l'information de localisation pour délimiter une zone spatiale dans laquelle se trouve la découpe d'image et des valeurs binaires relativement indifférentes des bits de l'information de localisation indiquent que la découpe d'image vient en chevauchement avec au moins deux champs de l'image de modulation;
obtenir, au moyen de l'unité d'évaluation (27), une somme pondérée de valeurs binaires des bits de l'information de localisation pour obtenir des valeurs binaires ou des valeurs binaires intermédiaires; où une pondération respective des valeurs binaires des bits de l'information de localisation correspond à une part de surface d'un champ sur la découpe d'image associée à une information de localisation respective;
effectuer l'évaluation au moyen d'une première et d'une deuxième valeur de seuil,
évaluer une valeur binaire intermédiaire qui se situe au-dessous de la première ou au-dessus de la deuxième valeur de seuil comme une valeur binaire relativement univoque; et
évaluer une valeur binaire intermédiaire qui se situe entre la première et la deuxième valeur de seuil comme une valeur binaire relativement indifférente.

8. Programme d'ordinateur avec un code de programme pour mettre en oeuvre le procédé selon la revendication 7 lorsque le programme d'ordinateur est exécuté sur un dispositif selon la revendication 1.
